# EUROPÄISCHE PATENTSCHRIFT

(11) **EP 3 819 363 B1**
(45) Veröffentlichungstag und Bekanntmachung des Hinweises auf die Patenterteilung: **18.01.2023**
(21) Anmeldenummer: 20205533.1
(22) Anmeldetag: 03.11.2020
(51) Int. Cl.: C12C 7/28, C12C 11/11, C12C 3/08, C12C 3/12

(54) **VERFAHREN UND VORRICHTUNG ZUR EXTRAKTION VON WERTGEBENDEN INHALTSSTOFFEN AUS PFLANZLICHEN INHALTSSTOFFTRÄGERN IN EINE BRAUFLÜSSIGKEIT**
DEVICE AND METHOD FOR EXTRACTING VALUABLE SUBSTANCES FROM VEGETABLE AROMA CARRIERS INTO A BREW
PROCÉDÉ ET DISPOSITIF D'EXTRACTION D'INGRÉDIENTS VALORISANT À PARTIR DES SUBSTRATS D'INGRÉDIENTS VÉGÉTAUX EN UN LIQUIDE DE BRASSAGE

(30) Priorität: 11.11.2019 DE 102019130400
(43) Veröffentlichungstag der Anmeldung: 12.05.2021
(73) Patentinhaber: Banke GmbH, 84416 Taufkirchen (Vils) (DE)
(72) Erfinder: Kohles, Michael, 85356 Freising (DE); Banke, Friedrich, 85570 Markt Schwaben (DE)
(74) Vertreter: Schlimme, Wolfram

(56) Entgegenhaltungen:
- WO-A1-2009/083205
- DE-A1-102013 101 435
- DE-A1-102015 103 909
- RIEMANN J: "SEPARATE HOPFENKOCHUNG UND BITTERSTOFFAUSBEUTE", BRAUWELT, NUERNBERG, DE, Bd. 115, Nr. 30, 24. Juli 1975 (1975-07-24), Seiten 994-998, XP008122981, ISSN: 0724-696X

## Beschreibung

### TECHNISCHES GEBIET

Die vorliegende Erfindung betrifft Verfahren zur Extraktion von wertgebenden Inhaltsstoffen aus pflanzlichen Inhaltsstoffträgern in eine Brauflüssigkeit gemäß dem Oberbegriff des Patentanspruchs 1. Derartige wertgebende Inhaltsstoffe sind beispielsweise Bitterstoffe, Aromastoffe (ätherische Öle) und Polyphenole aus pflanzlichen Inhaltsstoffträgern (zum Beispiel pflanzlichen Aromaträgern), insbesondere aus festen Hopfenprodukten. Die Erfindung betrifft ferner eine Vorrichtung zur Durchführung eines derartigen Verfahrens. Sie betrifft weiterhin auch eine Brauanlage mit einer solchen Vorrichtung.

### HINTERGRUND DER ERFINDUNG

Das erfindungsgemäße Verfahren, die erfindungsgemäße Vorrichtung und die erfindungsgemäße Brauanlage werden insbesondere beim Brauen von Bier zur Aromatisierung der Brauflüssigkeit sowohl im Heißbereich bei der Würzekochung als auch im Kaltbereich beim so genannten Hopfenstopfen eingesetzt, beispielsweise zur so genannten Aromahopfung. Die Anwendung der erfindungsgemäßen Verfahren ist aber nicht auf die Aromatisierung der Brauflüssigkeit mit Hopfen oder Hopfenfeststoffen, wie beispielsweise Hopfenpellets, beschränkt, sondern es sind auch andere pflanzliche Inhaltsstoffträger, wie beispielsweise Schalen von Zitrusfrüchten oder Kaffee, mit dem erfindungsgemäßen Verfahren zur Aromatisierung einsetzbar, wobei wertgebende Inhaltsstoffe aus den Inhaltsstoffträgern in die Brauflüssigkeit übertragen werden. Ebenfalls ist der Brauprozess, bei dem die Erfindung einsetzbar ist, nicht auf die Herstellung von Bier beschränkt, sondern er kann auch das Brauen von anderen Getränken, insbesondere alkoholfreien Getränken, umfassen. Nachstehend wird die Erfindung jedoch am Beispiel der Aromaanreicherung von Bier beschrieben, was sie aber nicht darauf beschränkt.

Bei der Würzekochung, also im Heißbereich einer Brauerei, werden vorwiegend Bitterstoffe (zum Beispiel alpha-Säuren, beta-Säuren) aus dem Hopfen oder aus Hopfenprodukten (wie beispielsweise Hopfenpellets) in die Würze, also die dortige Brauflüssigkeit, übertragen. Sie bestimmen die Bitterkeit eines Bieres. Aber auch Aromastoffe (zum Beispiel ätherische Öle) können, sofern sie nicht leicht flüchtig sind, bereits im Heißbereich in die Brauflüssigkeit übertragen werden. Bitterstoffe und Aromastoffe bilden - neben Polyphenolen - die "wertgebenden Inhaltsstoffe" eines Bieres.

In den letzten Jahren hat sich weltweit ein wachsender Markt für Biere mit stark betontem Hopfenaroma entwickelt. Um dies zu erreichen, werden Biere zunehmend auch kalt gehopft. Hierbei wird dem Bier im Kaltbereich einer Brauerei, bevorzugt nach der Gärung, dem noch nicht abgelagerten und noch nicht gereiften Jungbier, Hopfen, in der Regel in Form von Hopfenpellets oder Naturhopfen als pflanzliche Aromaträger, die in diesem Fall die Inhaltsstoffträger sind, zugegeben. Dies wird als "Kalthopfung" bezeichnet.

Die Kalthopfung wird häufig während der Lagerung des Jungbiers in einem Lagertank durchgeführt. Nach dieser Kalthopfung müssen die sich am Boden des Tanks als Sediment absetzenden festen pflanzlichen Aromaträger (zum Beispiel der Hopfentreber) durch Filtration oder Separation aus der Brauflüssigkeit (zum Beispiel dem Bier oder Jungbier) wieder abgeschieden werden. Dazu wird die Suspension, die sich im Lagertank ausgebildet hat, durch eine Filtrations- oder Separationseinrichtung in einen anderen Lagertank umgepumpt. Häufig wird auch erst das Sediment abgelassen, was aber mit hohen Verlusten an Bier und Aromakomponenten verbunden ist.

Die Erfindung ist aber - wie bereits ausgeführt wurde - nicht auf die Kalthopfung beschränkt, sondern sie lässt sich auch im Heißbereich einer Brauerei, beispielsweise im Sudhaus, einsetzen. Im Heißbereich der Brauerei geht es vorwiegend um die Isomerisierung von alpha-Säuren zu Iso-Alpha-Säure. Dieser Prozess ist durch die Löslichkeit der alpha-Säuren aus Hopfen oder Hopfenprodukten limitiert. Eine Verarbeitung in einem separaten Prozessbehälter gemäß der vorliegenden Erfindung würde die Extraktion und die Isomerisierung verbessern und gleichzeitig die Feststofffracht im Whirlpool reduzieren.

Daher umfasst der hier und nachstehend verwendete Begriff "wertgebende Inhaltsstoffe" nicht nur die im Kaltbereich in die Brauflüssigkeit (zum Beispiel in das Bier oder Jungbier) übertragenen Aromastoffe (zum Beispiel ätherische Öle) der pflanzlichen Aromastoffträger, sondern auch die im Heißbereich in die dortige Brauflüssigkeit (zum Beispiel in die Würze) übertragenen Bitterstoffe (zum Beispiel alpha-Säuren, beta-Säuren).

### STAND DER TECHNIK

Aus der EP 3 023 485 A1 sind eine Vorrichtung und ein Verfahren zur Extraktion von Inhaltsstoffen aus pflanzlichen Inhaltsstoffträgern in eine Brauflüssigkeit bekannt, bei der ein Schwebebettextraktor zur Anwendung kommt, um bei einem kleinen Behälter einen hohen Konzentrationsgradienten zu erzeugen. Nachteil hierbei sind die limitierte Prozessgeschwindigkeit und der begrenzte Volumenstrom, mit dem extrahiert werden kann. Gleichzeitig kann ein Ausspülen von Feststoffpartikeln in die abgezogene mit Inhaltsstoffen angereicherte Brauflüssigkeit nicht sichergestellt werden, wodurch zusätzlich nachgeschaltete Filtereinrichtungen erforderlich sind.

Die DE 813 144 A zeigt und beschreibt ein Verfahren zur Hopfenfiltration, das eine Kombination aus Filtration und Sedimentation im Heißbereich einer Brauerei darstellt.

Aus der WO 2019/015 879 A1 sind ein System und ein Verfahren zur Extraktion von löslichen Geschmackskomponenten aus einem festen Geschmacksträgermaterial in eine Brauflüssigkeit bekannt, die auf einer Cross-Flow-Filtration beruhen. Eine solche Filtration ist komplex da Hopfen ein sehr breites Spektrum an Partikelgrößen beinhaltet. Entsprechend müssen teilweise sehr hohe Quergeschwindigkeiten realisiert werden um einen Cross-Flow-Effekt zu erzielen. Des Weiteren kommt es dabei sehr leicht zu einem Verstopfen der Filterflächen, insbesondere mit Hefezellen und/oder Trubpartikeln. Beschrieben wird ein Umwälzverfahren, bei welchem in einem Prozessbehälter Hopfenprodukte mittels einer Extraktionsflüssigkeit aufgelöst werden, wozu die Extraktionsflüssigkeit mit den Hopfenprodukten bzw. den sich daraus lösenden Partikeln in einem Umwälzkreislauf durch das Innere des Cross-Flow-Filters hindurchgeführt werden. Während dieser Auflösungs-Umwälzung ist der Filtratauslass des Filters geschlossen. Eine beim Einlass in den Umwälzkreislauf einmündende Leitung für frische Extraktionsflüssigkeit ist während dieses Umlaufs geöffnet, um frische Extraktionsflüssigkeit hinzuzufügen bis der Prozessbehälter gefüllt ist. Erst wenn die Hopfenprodukte einigermaßen aufgelöst sind und sich so eines Suspension aus Hopfenprodukten und Extraktionsflüssigkeit ergeben hat, wird der Einlass für die frische Extraktionsflüssigkeit geschlossen und auch der Filtratauslass bleibt geschlossen. Anschließend wird die Suspension im Umwälzkreislauf weiter umgewälzt, wobei die Aromakomponenten aus den Feststoffen in die Extraktionsflüssigkeit extrahiert werden und die Hopfenprodukte vollständig aufgelöst werden. Dann werden sowohl der Filtratauslass als auch der Einlass für die Zufuhr von frischer Extraktionsflüssigkeit geöffnet, wobei mit der Umwälzung der Suspension fortgefahren wird. Dabei wird die aus dem Filtratauslass abgezogene Flüssigkeitsmenge ersetzt durch frische Extraktionsflüssigkeit.

Die EP 2 500 408 A1 zeigt und beschreibt eine Anlage und ein Verfahren zum Einbringen von Hopfen in einen Tank, wobei der Hopfen in einen Tank eingebracht wird. Dies hat den Nachteil, dass Hopfen oder Hopfenfeststoff in den Tank befördert werden muss, um einen effektiven Stoffaustausch zu gewährleisten. Hopfen kann jedoch aus Tanks nur aufwändig wieder separiert werden, da das komplette Tankvolumen einem Filtrations- oder Separationsprozess unterworfen werden muss. Dies ist nur möglich, indem der gesamte Tankinhalt durch eine Filtrations- oder Separationseinrichtung in einem weiteren Tank transferiert wird, wozu jedoch ein weiterer leerer Tank verfügbar sein muss. Dadurch schränkt sich die Gär- und Lagerkellerkapazität einer Brauerei ein und der Reinigungsaufwand wird durch den zusätzlich benutzten weiteren Tank erhöht. Hinzu kommt, dass Hopfenpartikel in größeren Verrohrungen und Ventilknoten zu höherem Verschleiß, Defekten, Verstopfungen, Undichtigkeiten und Verunreinigungen führen können.

Die DE 10 2008 063 304 A1 zeigt und beschreibt ein Verfahren und eine Vorrichtung zur Bierbereitung, wobei ein Hopfenprodukt nicht auf einmal in die gesamte Würze eingebracht wird, sondern immer wieder frisches Extraktionsmittel dem Hopfenprodukt zugeführt wird. Dadurch soll das Konzentrationsgefälle zwischen dem Hopfenprodukt und dem zugeführten Extraktionsmittel stets hoch gehalten und so ein hoher Wirkungsgrad der Extraktion erzielt werden. Zur Extraktion wird ein von einer Würzepfanne separater Extraktionsbehälter verwendet. Zunächst wird eine Suspension aus Extraktionsmittel und Hopfenprodukt hergestellt, die dann einer Fest-Flüssig-Trennung unterzogen wird, wobei das mit den Aromastoffen versetzte Extraktionsmittel anschließend wieder abgezogen und neues, frisches Extraktionsmittel dem verbliebenen Hopfenprodukt zur erneuten Durchmischung zugeführt wird. Nach einem Auflösen der Hopfenprodukte im flüssigen Extraktionsmittel erfolgt zunächst eine vollständige Sedimentation der Feststoffe in der erzeugten Suspension, bevor das mit den Extrakten versehene Extraktionsmittel wieder abgezogen wird. Es werden dabei diskontinuierlich mehrere Extraktionsprozesse mit demselben Extraktionsmittel zeitlich nacheinander durchgeführt.

Die WO 2009/083205 A1 zeigt und beschreibt ein Verfahren und eine Vorrichtung zur Bierbereitung, wobei die aus dem Läuterbottich anströmende Würze einerseits in üblicher Weise in eine Würzepfanne eingeleitet wird, anschließend durch einen Heißtrub-Abscheider geleitet wird und dann einem Würzekühler zugeführt wird, von wo aus sie in einen Gärbehälter fließt. Ein Teil der Würze wird zwischen dem Läuterbottich und der Würzepfanne aus dem Würze-Hauptstrom abgezweigt und durch eine Würzezapfleitung im Bypass einem Heizbehälter zugeführt. In diesem Heizbehälter wird Hopfen zugegeben, so dass im Heizbehälter eine Eluierung der Hopfen-Inhaltsstoffe in die Würze erfolgt. Aus des Heizbehälter wird die mit Hopfen-Inhaltsstoffen angereicherte Würze durch eine Diffusionsbatterie zurück zum Haupt-Würzestrom zwischen dem Heißtrubabscheider und dem Würzekühler geleitet. Es wird also parallel zur klassischen Anreicherung der Würze mit Hopfen oder Hopfenfeststoffen in der Würzepfanne eine zusätzliche Hopfengabe in einem Bypass vorgenommen. Diese im Heißbereich einer Brauerei stattfindende Würzebehandlung im Bypass erfolgt somit intervallmäßig, also als so genannter Batch-Prozess.

### DARSTELLUNG DER ERFINDUNG

Aufgabe der vorliegenden Erfindung ist es daher, ein gattungsgemäßes Verfahren und eine gattungsgemäße Vorrichtung anzugeben, mit denen wertgebende Inhaltsstoffe in die Brauflüssigkeit überführt werden können, ohne dass dabei Feststoffpartikel der pflanzlichen Inhaltsstoffträger ausgetragen werden, oder zumindest weitgehend zurückgehalten werden.

Der auf das Verfahren gerichtete Teil der Aufgabe wird gelöst durch das Verfahren mit den Merkmalen des Anspruchs 1. Der auf die Vorrichtung gerichtete Teil der Aufgabe wird gelöst durch die Vorrichtung mit den Merkmalen des Anspruchs 6.

Beim erfindungsgemäßen Verfahren zur Extraktion von wertgebenden Inhaltsstoffen aus pflanzlichen Inhaltsstoffträgern in eine Brauflüssigkeit nach Anspruch 1 wird zunächst eine Suspension aus einer frischen Brauflüssigkeit und pflanzlichen Inhaltsstoffträgern erzeugt, wobei sich die pflanzlichen Inhaltsstoffträger zumindest teilweise in der Suspension verteilen oder auflösen, wobei wertgebende Inhaltsstoffe aus den pflanzlichen Inhaltsstoffträgern in die Brauflüssigkeit übergehen. Das erfindungsgemäße Verfahren ist gekennzeichnet durch die Schritte:
a') Zuführen der Suspension zu einer Fest-Flüssig-Trenneinrichtung;
b') Einleiten frischer Brauflüssigkeit im Inline-Betrieb in die Suspension auf ihrem Weg zur Fest-Flüssig-Trenneinrichtung;
c') Abscheiden der pflanzlichen Inhaltsstoffträger aus der Suspension in der Fest-Flüssig-Trenneinrichtung;
d') Abführen der mit wertgebenden Inhaltsstoffen angereicherten Brauflüssigkeit aus der Fest-Flüssig-Trenneinrichtung zur weiteren Verwendung und
e') Abführen der im Schritt c') aus der Suspension abgeschiedenen pflanzlichen Inhaltsstoffträger aus der Fest-Flüssig-Trenneinrichtung in ein Feststoffsammelgefäß.

Bei diesem Inline-Verfahren wird zunächst eine "überkonzentrierte" Erst-Suspension erzeugt, wie es weiter unten noch beschrieben wird. Während diese Erst-Suspension zu einer Fest-Flüssig-Trenneinrichtung geleitet wird, wird im Schritt b') frische Brauflüssigkeit in die Suspension eingeleitet, wodurch das Konzentrationsgefälle in der Suspension (hinsichtlich der zu transferierenden wertgebenden Inhaltsstoffe) zwischen der durch das Einleiten der frischen Brauflüssigkeit "verdünnten" Brauflüssigkeit in der Suspension und den in der Suspension enthaltenen pflanzlichen Inhaltsstoffträgern wieder ansteigt. Dieses erhöhte Konzentrationsgefälle verbessert wiederum den Stoffübergang der wertgebenden Inhaltsstoffe in die Brauflüssigkeit.

Zur Herstellung der Erst-Suspension kann beispielsweise eine vorgegebene Menge pflanzlicher Inhaltsstoffträger in einem Dispergier- und Extrahierbehälter mit einem vorgegebenen Volumen frischer Brauflüssigkeit in Kontakt gebracht werden, wobei sich die pflanzlichen Inhaltsstoffträger unter Ausbildung der Erst-Suspension zumindest teilweise in der Brauflüssigkeit verteilen oder auflösen und wobei wertgebende Inhaltsstoffe aus den pflanzlichen Inhaltsstoffträgern in die Brauflüssigkeit übergehen.

Um eine mit wertgebenden Inhaltsstoffen angereicherte Brauflüssigkeit zu erhalten, die mit den zu übertragenden wertgebenden Inhaltsstoffen gesättigt ist, wird bislang pro Volumen frischer Brauflüssigkeit, also Brauflüssigkeit, die noch keine entsprechenden wertgebenden Inhaltsstoffe oder nur geringe Mengen solcher wertgebenden Inhaltsstoffe aufweist, nur eine bestimmte Menge ("Sättigungsmenge") an pflanzlichen Inhaltsstoffträgern zur Bildung der Suspension hinzugegeben.

Unter dem Begriff "frische" Brauflüssigkeit ist eine in einem erfindungsgemäßen Verfahren als Brauflüssigkeit eingesetzte Flüssigkeit zu verstehen, die bezüglich zumindest eines der zu übertragenden wertgebenden Inhaltsstoffe (beispielsweise alpha-Säuren im Heißbereich oder Aromastoffe im Kaltbereich) eine Konzentration des betreffenden wertgebenden Inhaltsstoffs aufweist, die geringer ist als die Konzentration dieses wertgebenden Inhaltsstoffs in der Suspension, der die "frische" Brauflüssigkeit zugeführt wird. Die Brauflüssigkeit kann bei einer Verfahrensanwendung im Kaltbereich beispielsweise Wasser, Bier oder Jungbier und bei einer Verfahrensanwendung im Heißbereich beispielsweise Würze oder Nachgusswasser sein.

Bei der Kalthopfung beträgt das Verhältnis beispielsweise 1,5 bis 2 Masse-% Hopfenfeststoff in der Suspension, um beispielsweise einen vollständigen Transfer von Linalool als Aromastoff in die Brauflüssigkeit zu erzielen. Darüber fällt die Transferrate der Aromastoffe aus den pflanzlichen Inhaltsstoffträgern in die Brauflüssigkeit deutlich ab. Entsprechend ist es unwirtschaftlich und nicht sinnvoll, über ein vorgegebenes Mengenverhältnis von pflanzlichen Inhaltsstoffträgern zu frischer Brauflüssigkeit ("Sättigungsverhältnis") hinaus noch mehr pflanzliche Inhaltsstoffträger zu der Suspension hinzu zu geben, also beispielsweise ein Konzentrat mit größeren Hopfenmengen herzustellen. Soll mehr Inhaltsstoffträgervolumen verarbeitet werden, so müsste auch das Volumen der frischen Brauflüssigkeit erhöht werden, was aber bedeuten würde, dass ein viel größeres Behältervolumen des Dispergier- und Extrahierbehälter bereitgestellt werden müsste. Dies wiederum ist in vielen Brauereien aus Platzgründen häufig nicht möglich und würde zudem die Anlagenkosten deutlich erhöhen.

Beim Verfahren der Erfindung wird vor dem Schritt a') eine Erst-Suspension hergestellt, deren Verhältnis von pflanzlichen Inhaltsstoffträgern zur frischen Brauflüssigkeit deutlich über der "Sättigungskonzentration" liegt, also eine "überkonzentrierte" Suspension. Im Fall der Kalthopfung liegt das hergestellte Verhältnis bei etwa 6 bis 8,5 Masse-% Hopfenfeststoff in der Erst-Suspension. Aufgrund des hohen Konzentrationsgefälles (hinsichtlich der zu transferierenden Inhaltsstoffe) zwischen der frischen Brauflüssigkeit und den pflanzlichen Inhaltsstoffträgern (zum Beispiel pflanzlichen Aromaträgern), erfolgt hier ein schneller und effektiver Stoffübergang der wertgebenden Inhaltsstoffe (zum Beispiel von Aromastoffen) in die Brauflüssigkeit.

Besonders vorteilhaft ist das erfindungsgemäße Verfahren, wenn die frische Brauflüssigkeit Wasser, Würze, Bier oder Jungbier ist.

Weitere bevorzugte und vorteilhafte Ausgestaltungsmerkmale des erfindungsgemäßen Verfahrens sind Gegenstand der Unteransprüche 2 bis 8.

Vorzugsweise wird die im Schritt b') mit frischer Brauflüssigkeit versetzte Suspension durch eine Misch- und/oder Reaktionseinrichtung hindurchgeleitet wird, bevor sie zur Fest-Flüssig-Trenneinrichtung gelangt. Hierdurch kann Einfluss auf die Kontaktzeit und/oder die Vermischung zwischen Brauflüssigkeit und den in der Suspension enthaltenen Inhaltsstoffträgern oder wertgebenden Inhaltstoffen (zum Beispiel alpha-Säuren im Heißbereich) genommen werden. Eine Änderung der Fließgeschwindigkeit kann hierbei zum Beispiel zur Änderung der Turbulenz und damit zu einer Verbesserung der Durchmischung oder zur Änderung der Kontaktzeit verwendet werden.

Wird die Kontaktzeit zwischen der Brauflüssigkeit und den in der Suspension enthaltenen Inhaltsstoffträgern verlängert, so kann der Stoffübergang weiter verbessert werden. Falls nur eine Reaktionseinrichtung vorgesehen ist, kann diese von einer eine Reaktionsstrecke bildenden Rohrleitung gebildet sein. Eine solche Reaktionsstrecke kann eine größere Rohr-Nennweite, also einen größeren Innendurchmesser, aufweisen als die Rohrleitungen davor und dahinter. In der Reaktionsstrecke ist dann die Fließgeschwindigkeit herabgesetzt, da der Volumenstrom konstant bleibt, und die Verweilzeit in diesen Abschnitt ist vergrößert. Alternativ kann auch die Fließgeschwindigkeit zum Erzielen einer höheren Turbulenz erhöht werden (zum Beispiel durch Verringerung der Rohr-Nennweite).

Wenn die im Schritt b') in die Suspension eingeleitete frische Brauflüssigkeit Bier oder Jungbier ist, das aus einem Lagertank für Bier oder Jungbier bezogen wird, wird die im Schritt d') aus der Fest-Flüssig-Trenneinrichtung abgeführte und mit wertgebenden Inhaltsstoffen angereicherten Brauflüssigkeit vorzugsweise in den Lagertank zurück geleitet.

Von Vorteil ist auch eine Weiterbildung des alternativen Verfahrens, bei der die im Schritt d') aus der Fest-Flüssig-Trenneinrichtung abgeführte und mit wertgebenden Inhaltsstoffen angereicherte Brauflüssigkeit mit frischer Brauflüssigkeit vermischt und dann in einen Vorratsbehälter für aromatisierte Brauflüssigkeit geleitet wird.

Besonders bevorzugt ist eine Ausführungsform der Erfindung, bei der zur Erzeugung der Erst-Suspension aus der frischen Brauflüssigkeit und pflanzlichen Inhaltsstoffträgern eine vorgegebene Menge pflanzlicher Inhaltsstoffträger in einem Dispergierbehälter mit einem vorgegebenen Volumen frischer Brauflüssigkeit in Kontakt gebracht wird und sich die pflanzlichen Inhaltsstoffträger unter Ausbildung der Erst-Suspension zumindest teilweise darin verteilen oder auflösen.

Vorzugsweise wird das erfindungsgemäße Verfahren zur Extraktion von wertgebenden Inhaltsstoffen aus pflanzlichen Inhaltsstoffträgern in eine Brauflüssigkeit im Kaltbereich einer Brauanlage, also bei der Kalthopfung des Bieres, durchgeführt.

Von besonderem Vorteil ist es, wenn die pflanzlichen Inhaltsstoffträger von Hopfen oder Hopfenprodukten und/oder von pflanzlichen Aromaträgern gebildet sind.

Ebenfalls von besonderem Vorteil ist es, wenn die wertgebenden Inhaltsstoffe von Bitterstoffen, insbesondere von alpha-Säuren, beta-Säuren und/oder Linalool, von Aromastoffen, insbesondere von ätherischen Ölen, und/oder von Polyphenolen gebildet sind.

Der auf die Vorrichtung gerichtete Teil der Aufgabe wird in einer ersten Variante gelöst durch eine Vorrichtung mit den Merkmalen des Patentanspruchs 9.

Diese erfindungsgemäße Vorrichtung zur Extraktion von wertgebenden Inhaltsstoffen aus pflanzlichen Inhaltsstoffträgern in eine Brauflüssigkeit im Inline-Betrieb gemäß einem Verfahren nach Anspruch 1 ist versehen mit einer Transportleitung für eine Suspension aus einer Brauflüssigkeit und pflanzlichen Inhaltsstoffträgern, die von einer Suspensionsquelle zu einer Fest-Flüssig-Trenneinrichtung führt, und zeichnet sich erfindungsgemäß dadurch aus, dass weiterhin eine Zuführleitung für frische Brauflüssigkeit vorgesehen ist, die in die Transportleitung einmündet. Eine solche Fest-Flüssig-Trenneinrichtung kann beispielsweise einen Dekanter, eine Zentrifuge, ein Bogensieb, Filterkerzen oder einen Sedimentationstank aufweisen oder dadurch gebildet sein.

Dabei ist es von Vorteil, wenn zwischen der Einmündung der Zuführleitung für frische Brauflüssigkeit in die Transportleitung und der Fest-Flüssig-Trenneinrichtung eine Misch- und/oder Reaktionseinrichtung vorgesehen ist.

Vorzugsweise ist die Vorrichtung mit nur einer Reaktionseinrichtung versehen, die von einer eine Reaktionsstrecke bildenden Rohrleitung gebildet ist.

Von Vorteil ist es, wenn die Fest-Flüssig-Trenneinrichtung einen Dekanter, eine Zentrifuge, ein Bogensieb, Filterkerzen oder einen Sedimentationstank aufweist oder dadurch gebildet ist.

In einer bevorzugten Ausführungsform der Vorrichtung weist die Suspensionsquelle einen Dispergierbehälter zur Erzeugung einer Suspension aus einer frischen Brauflüssigkeit und pflanzlichen Inhaltsstoffträgern auf.

Dabei ist es von Vorteil, wenn im unteren Teil des Dispergierbehälters eine Rühreinrichtung vorgesehen ist. Diese Rühreinrichtung bildet eine Dispergier- und Homogenisiereinrichtung für die Suspension.

Bei einer weiteren bevorzugten Ausführungsform der Vorrichtung sind Steuer- oder Regelventile vorgesehen, mittels derer die Stoffströme durch die Transportleitung und die Brauflüssigkeitszuführleitung zueinander einstellbar sind

Diese Vorrichtung zur Extraktion von Inhaltsstoffen aus pflanzlichen Inhaltsstoffträgern in eine Brauflüssigkeit kann Steuerungsmittel und zumindest eine Steuerungseinrichtung aufweisen, um einen optimierten automatischen Betrieb der Vorrichtung zu ermöglichen.

Die Erfindung betrifft zudem eine Brauanlage, die eine erfindungsgemäße Vorrichtung zur Durchführung eines erfindungsgemäßen Verfahrens zum Zweck der Kalthopfung aufweist. So ist eine solche erfindungsgemäße Vorrichtung entweder stationär in den Kaltbereich der Brauanlage integriert oder sie ist als mobile Vorrichtung ausgestaltet, die mit einer (oder mehreren) Brauanlage(n) verbindbar und so in deren Fließwege der Brauflüssigkeit im Kaltbereich implementierbar ist. Vorzugsweise erfolgt dies in Prozessstromrichtung hinter dem Würzekühler oder hinter einem Gärtank, besonders bevorzugt aber in einem Brauflüssigkeits-Kreislauf im Lagerkeller, in dem Jungbier aus einem Lagertank durch die erfindungsgemäße Vorrichtung und zurück in den Lagertank umgewälzt wird oder in einen anderen Tank oder zu einem nachgelagerten Prozess (zum Beispiel zur Abfüllung, zur Bierfiltration oder zur Bierseparation) transferiert wird.

Alternativ kann die erfindungsgemäße Vorrichtung aber auch im Heißbereich der Brauereianlage, also vor dem Würzekühler, mobil oder stationär eingesetzt werden. Hier kann mittels der erfindungsgemäßen Vorrichtung und des erfindungsgemäßen Verfahrens beispielsweise die Isomerisierung von alpha-Säuren zu Iso-alpha-Säuren und damit die Bitterstoffausbeute verbessert werden. Zudem kann die Feststofffracht in die Heißtrub-Abscheideeinrichtung (zum Beispiel einen Whirlpool) deutlich herabgesetzt werden, wenn die Hopfenpartikel nicht in den eigentlichen Sudprozess gelangen, sondern im Bypass extrahiert und abgeschieden werden. Dadurch kann die Effizienz der Heißtrub-Abscheideeinrichtung gesteigert werden, was zu geringeren Würzeverlusten führen kann

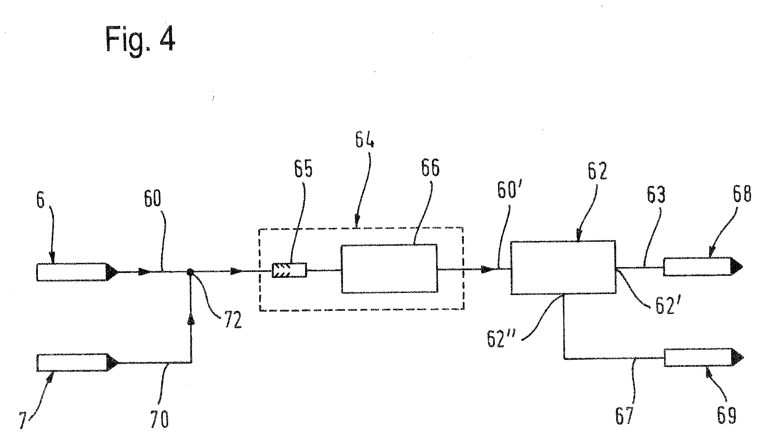

Bei der Durchführung des erfindungsgemäßen Verfahrens in einem Brauprozess können der Brauflüssigkeit und/oder der Suspension vorzugsweise geeignete Additive zuzugeben werden, um zum einen die Geschwindigkeit des Stofftransportes und/oder die Löslichkeit der wertgebenden Inhaltsstoffe positiv zu beeinflussen (beispielsweise durch Änderung des pH-Wertes oder der Polarität der Flüssigkeit). Auch kann vorteilhafter Weise die Brauflüssigkeit und/oder die Suspension einer thermischen Behandlung unterworfen werden, was insbesondere bei einem Einsatz der in den Figuren 4 bis 7 gezeigten Vorrichtung, also bei der Inline-Bereitung der Suspension, vorteilhaft ist. Durch eine thermisch bedingte oder durch Additive verursachte verbesserte Löslichkeit der wertgebenden Inhaltsstoffe ist eine kürzere Kontaktzeit erforderlich, was zu einer geringerer Rückverdünnung führt. Dadurch wird die gesamte Prozesszeit reduziert.

Durch die mit dem erfindungsgemäßen Verfahren nach Anspruch 1 durchgeführte Rückverdünnung der Suspension wird jeweils die Transferrate der wertgebenden Inhaltsstoffe in die Brauflüssigkeit wieder vergrößert. Unter dem Begriff "Transferrate" ist das Verhältnis der Masse eines in das Fluid überführten wertgebenden Inhaltsstoffs zur Ausgangsmasse dieses Inhaltsstoffs im Vorrat der Inhaltsstoffträger zu verstehen. Während eines jeweiligen ersten Inhaltsstofftransfers aus den Inhaltsstoffträgern in die Brauflüssigkeit (in der Erst-Suspension) steigt die Konzentration der wertgebenden Inhaltsstoffe in der Brauflüssigkeit mit der Zeit an, bis aufgrund des geringer werdenden Konzentrationsgradienten die Transfergeschwindigkeit abnimmt und sich eine maximal lösbare Konzentration einstellt. Der verbleibende Rest dieses wertgebenden Inhaltsstoffes im Vorrat der Inhaltsstoffträger kann aufgrund der Eigenschaften der Brauflüssigkeit nicht weiter in Lösung gehen. Der Transfer aus dem Inhaltsstoffträger in die Brauflüssigkeit ist also unvollständig und es bleiben wertgebende Inhaltsstoffe im Vorrat der Inhaltsstoffträger zurück. Bei der Rückverdünnung der Suspension (Verfahren nach Anspruch 1) wird die Konzentrationsdifferenz wieder vergrößert, wodurch noch vorhandene ungelöste wertgebende Inhaltsstoffe in Lösung gehen können.

Durch die erfindungsgemäßen Verfahren kann also mit einem kleineren Dispergierbehälter die gleiche Menge Brauflüssigkeit mit wertgebenden Inhaltsstoffen versehen werden, also beispielsweise mit Aromastoffen aromatisiert werden, ohne dass die Inhaltsstoffträger in den eigentlichen großvolumigen Tank eingebracht werden müssen um ein ausreichenden Transfer des betreffenden wertgebenden Inhaltsstoffs sicherzustellen. Die erfindungsgemäße Vorrichtung kann daher sehr kompakt und platzsparend in eine Brauereianlage implementiert werden.

Versuche der Erfinder haben ergeben, dass bei einer Erst-Suspension mit 6,5 Masse-% Hopfenpellets als Inhaltsstoffträger und einer anschließenden Rückverdünnung auf 1,5 Masse-% der gleiche massenbezogene Transfer des wertgebenden Inhaltsstoffs Linalool in die Brauflüssigkeit erzielt werden können wie bei einer Suspension, die von vorneherein nur 1,5 Masse-% Hopfenpellets enthält. Die Summe des transferierten wertgebenden Inhaltsstoffes bzw. die Ausbeute ist also durch dieses Verfahren gleichzusetzen mit der Einbringung der Aromakomponente in einen größeren Tank mit niedrigerer Massenkonzentration aber gleichen Mengen an für den Transfer zur Verfügung stehenden Aromakomponenten. Die Aromakomponenten müssen hierzu aber nicht in den eigentlichen großvolumigen Tank eingebracht werden.

Wird versucht, ausschließlich mit einer Suspension mit 6,5 Masse-% zu arbeiten, also ohne Rückverdünnung, so wird im Vergleich mit der 1,5 Masse-% Suspension nur eine etwa 50-prozentige Transferrate erzielt.

Die Versuche mit den erfindungsgemäßen Verfahren und Vorrichtungen haben auch gezeigt, dass die anfängliche Dispergier- und Extraktionszeit zur Herstellung der Erst-Suspension, also die "erste vorgegebene Zeitspanne", vorzugsweise zwischen 30 Minuten und zwei Stunden, weiter vorzugsweise zwischen einer Stunde und zwei Stunden beträgt. Vorzugsweise beträgt die Massekonzentration der Inhaltsstoffträger (zum Beispiel Hopfenpellets) der Erst-Suspension 6 bis 8 Masse-%, weiter vorzugsweise 6,5 bis 7 Masse-% und besonders bevorzugt 6,5 Masse-%.

Bei der Durchführung des erfindungsgemäßen Verfahrens hat sich gezeigt, dass die Rückverdünnung der Erst-Suspension durch das Einleiten der frischen Brauflüssigkeit in den in der Transportleitung 60 fließenden Erst-Suspensions-Strom dann zu einer optimalen Linalool-Ausbeute führt, wenn das auf die Massekonzentration der Inhaltsstoffträger (Hopfen-Pellets) in der Erst-Suspension bezogene Verdünnungsverhältnis 1:3 bis 1:5 beträgt.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine schematische Darstellung einer ersten Vorrichtung zur Durchführung eines ersten Verfahrens in einer ersten Untervariante;
- Fig. 2: eine schematische Darstellung einer zweiten Vorrichtung zur Durchführung des ersten Verfahrens in einer zweiten Untervariante;
- Fig. 3: ein Flussdiagramm des ersten Verfahrens;
- Fig. 4: eine schematische Darstellung einer dritten, erfindungsgemäßen Vorrichtung zur Durchführung eines zweiten, erfindungsgemäßen Verfahrens;
- Fig. 5: eine schematische Darstellung der dritten erfindungsgemäßen Vorrichtung zur Durchführung des zweiten erfindungsgemäßen Verfahrens mit einem Dispergierbehälter;
- Fig. 6: eine schematische Darstellung der dritten erfindungsgemäßen Variante aus Fig. 5 integriert in einen Bierkreislauf im Lagerbereich einer Brauereianlage;
- Fig. 7: eine schematische Darstellung einer Abwandlung der dritten erfindungsgemäßen Vorrichtung zur Durchführung des zweiten erfindungsgemäßen Verfahrens
- Fig. 8: eine schematische Darstellung einer ersten Abwandlung der in Fig. 4 dargestellten dritten erfindungsgemäßen Vorrichtung mit integrierter Kurzzeiterhitzungseinrichtung und
- Fig. 9: eine schematische Darstellung einer zweiten Abwandlung der in Fig. 4 dargestellten dritten erfindungsgemäßen Vorrichtung mit integrierter Kurzzeiterhitzungseinrichtung.

### DARSTELLUNG VON BEVORZUGTEN AUSFÜHRUNGSBEISPIELEN

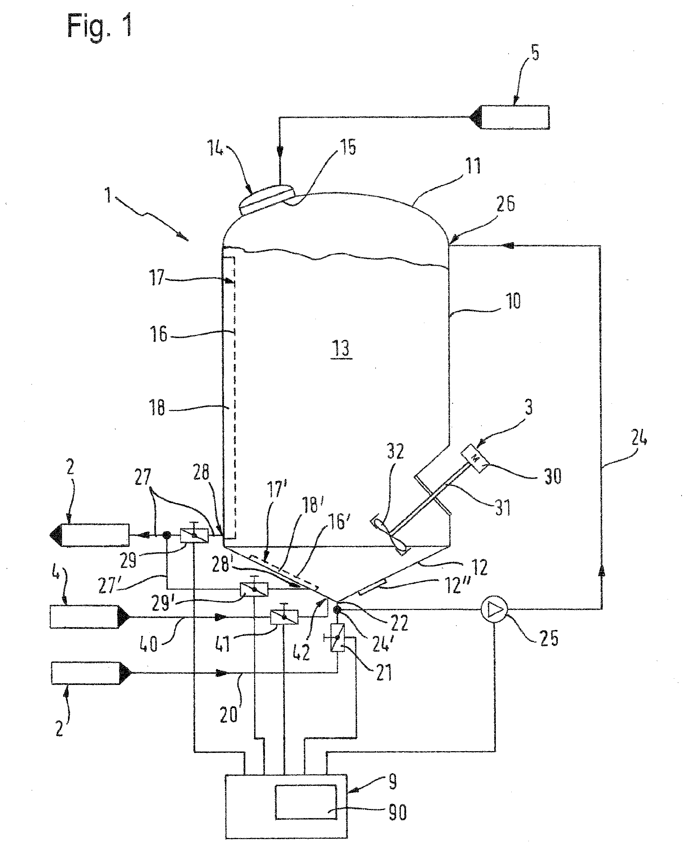

In Fig. 1 ist eine erste nicht-erfindungsgemäße Ausführungsform einer Vorrichtung zur Extraktion von wertgebenden Inhaltsstoffen (bei der Bierherstellung zum Beispiel Bitterstoffen, ätherischen Ölen als Aromaträger oder Polyphenolen) aus pflanzlichen Inhaltsstoffträgern in eine Brauflüssigkeit schematisch dargestellt.

Die Vorrichtung weist einen teilweise geschnitten dargestellten Dispergier- und Extrahierbehälter 1 auf, der als Kessel mit einer zylindrischen Umfangswand 10, einer kuppelartigen oberen Deckenwand 11 und einem kegelförmigen Behälterboden 12 versehen ist, die gemeinsam einen Prozessraum 13 im Inneren des Dispergier- und Extrahierbehälters 1 umgeben. In der kuppelartigen oberen Deckenwand 11, die mit der zylindrischen Wandung 10 fest verbunden, beispielsweise verschweißt, ist, ist eine mit einem Deckel 14 verschließbare Einfüllöffnung 15 für pflanzliche Inhaltsstoffträger, beispielsweise Hopfen oder Hopfenpellets, vorgesehen. Bei geöffnetem Deckel 14 können die pflanzlichen Inhaltsstoffträger aus einem Inhaltsstoffträgervorrat 5 durch die Öffnung 15 in den Prozessraum 13 eingefüllt werden, die dort - wie es weiter unten noch beschrieben wird - mit einer Brauflüssigkeit eine Suspension bilden. Im Behälterboden 12 ist ein Auslass 12" zum Austragen von Feststoffen vorgesehen.

Eine von einem in der Figur nur schematisch dargestellten Lagertank 2 für frische Brauflüssigkeit kommende Zulaufleitung 20, in der ein Absperrventil 21 vorgesehen ist, ist mit einem Fluidanschluss 22 an der tiefsten Stelle des kegelförmigen Behälterbodens 12 und - in Strömungsrichtung hinter dem Absperrventil 21 - mit einer Umwälzleitung 24 verbunden. In der Umwälzleitung 24 ist eine Umwälzpumpe 25 angeordnet, mit der der Dispergierprozess durch Umwälzen der Suspension verbessert werden kann. Die Umwälzleitung 24 mündet im oberen Bereich der zylindrischen Wandung 10 des Dispergier- und Extrahierbehälters 1 und bildet dort einen Zulauf 26 in den Prozessraum 13. Das Absperrventil 21 ist in der Zulaufleitung 20 zwischen dem Vorratsbehälter 2 und dem Abzweig 24' der Umwälzleitung 24 gelegen. Wird das Absperrventil 21 geschlossen, so lässt sich mittels der Umwälzleitung 24 und der darin enthaltenen Pumpe 25 die im Prozessraum 13 enthaltene Suspension aus Brauflüssigkeit und pflanzlichen Inhaltsstoffträgern umwälzen. Die Suspension verlässt dabei den Prozessraum 13 durch den Fluidanschluss 22 an der tiefsten Stelle des kegelförmigen Behälterbodens 12 und wird durch den Zulauf 26 wieder in den Prozessraum 13 eingeleitet.

Im Inneren des Dispergier- und Extrahierbehälters 1 ist zwischen dem Prozessraum 13 und der zylindrischen Umfangswand 10 des Dispergier- und Extrahierbehälters 1 - zumindest in einem Teilbereich der zylindrischen Umfangswand 10 - eine Siebeinrichtung 16 vorgesehen, die eine obere Fest-Flüssig-Trenneinrichtung 17 ausbildet und die einen oberen Filtrat-Sammelraum 18 vom Prozessraum 13 abteilt. Eine Abflussleitung 27 mündet in den oberen Filtrat-Sammelraum 18 und bildet dort einen oberen Auslass 28 für das Filtrat, also für die mit wertgebenden Inhaltsstoffen angereicherte Brauflüssigkeit. Die Abflussleitung 27, in der ebenfalls ein Absperrventil 29 vorgesehen ist, führt in den Lagertank 2, wie es in Fig. 1 symbolisch dargestellt ist.

Eine weitere Siebeinrichtung 16' ist im kegelförmigen Boden 12 angebracht und teilt dort einen unteren Filtrat-Sammelraum 18' vom Prozessraum 13 ab. Auch diese untere Siebeinrichtung 16' bildet eine untere Fest-Flüssig-Trenneinrichtung 17' aus. Aus diesem unteren Filtrat-Sammelraum 16' führt eine untere Abflussleitung 27' zur Abflussleitung 27 und bildet so einen unteren Auslass 28' für das Filtrat. Auch in der unteren Abflussleitung 27' ist ein Absperrventil 29' vorgesehen.

Im unteren Teil des Dispergier- und Extrahierbehälters 1 ist eine Rühreinrichtung 3 mit einem Rührantrieb 30, einer in den Prozessraum 13 hineinführenden Rührwelle 31 und einem am freien Ende der Rührwelle 31 ausgebildeten Rührpropeller 32 vorgesehen. Die Rühreinrichtung 3 bildet eine Dispergier- und Homogenisiereinrichtung für die im Prozessraum 13 enthaltene Suspension.

Des Weiteren ist in Fig. 1 eine Inertgasleitung 40 gezeigt, die von einem InertgasVorratsbehälter 4 zu einem im kegelförmigen Behälterboden 12 vorgesehenen Inertgaseinlass 42 führt. Auch in der Inertgasleitung 40 ist ein Absperrventil 41 vorgesehen.

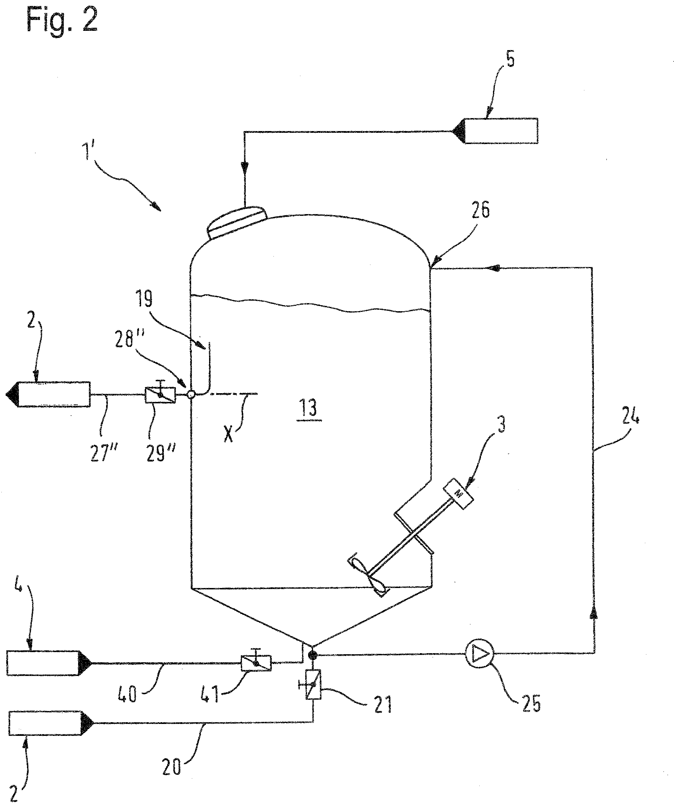

Eine alternative Ausführungsform der vorstehend beschriebenen Vorrichtung ist in Fig. 2 dargestellt, wobei dieselben Bezugszeichen wie in Fig. 1 dieselben Bauteile beziehungsweise Komponenten bezeichnen.

Der in Fig. 2 dargestellte Dispergier- und Extrahierbehälter 1' ist im Grunde genommen genauso aufgebaut wie der Dispergier- und Extrahierbehälter 1 der Fig. 1; es fehlen jedoch die Siebvorrichtungen, die im Dispergier- und Extrahierbehälter 1 aus Fig. 1 einen jeweiligen Filtrat-Sammelraum vom Prozessraum 13 abteilen. Stattdessen ist der Dispergier- und Extrahierbehälter 1' aus Fig. 2 mit einem Ablauf für die mit den wertgebenden Inhaltsstoffen angereicherte Brauflüssigkeit, zum Beispiel die aromatisierte Brauflüssigkeit, versehen, der einen im Prozessraum 13 angeordneten und um eine horizontale Achse X drehbaren Rohrarm 19 aufweist, welcher mit einer außerhalb des Dispergier- und Extrahierbehälters 1 gelegenen Abflussleitung 27" durch ein Absperrventil 29" verbunden ist und so einen Auslass 28" für die mit wertgebenden Inhaltsstoffen angereicherte Brauflüssigkeit bildet. Die Lage des Rohrarms ist dabei so zu wählen, dass damit die flüssige Phase unterschiedlicher Suspensionskonzentrationen abgezogen werden kann, nämlich bei unterschiedlichen Sedimenthöhen aufgrund unterschiedlicher Feststoffeigenschaften oder Massenkonzentrationen. Alternativ zu dem beschriebenen drehbaren Rohrarm können auch mehrere Behälterauslässe in unterschiedlichen Höhen vorgesehen sein.

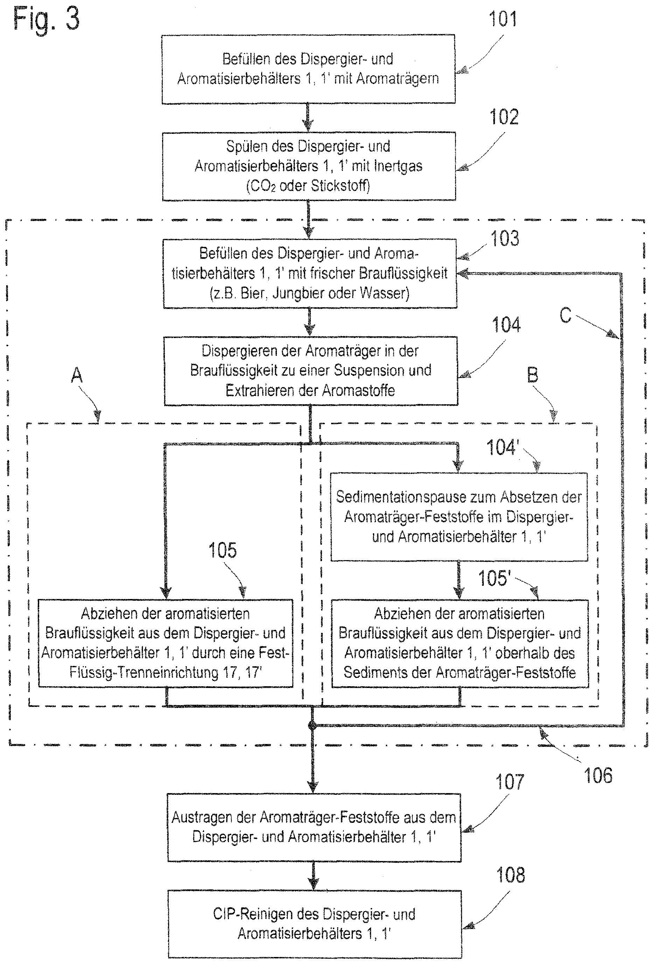

In Fig. 3 ist ein Flussdiagramm eines nicht-erfindungsgemäßen Verfahrens zur Extraktion von Inhaltsstoffen aus pflanzlichen Inhaltsstoffträgern wiedergegeben, wobei die dortige strichpunktierte Linie den eigentlichen Kern des Verfahrens umgrenzt. Die gestrichelten Linien umschließen jeweils eine Untervariante dieses nicht-erfindungsgemäßen Verfahrens.

Zunächst wird in einem ersten Vorbereitungsschritt 101 der Dispergier- und Extrahierbehälter 1 beziehungsweise 1' mit einer vorgegebenen Menge pflanzlicher Inhaltsstoffträger aus dem Inhaltsstoffträgervorrat 5 bei geöffnetem Deckel 14 durch die Einfüllöffnung 15 befüllt. Im Anschluss daran wird in einem nächsten Schritt 102 der mit der vorgegebenen Menge pflanzlicher Inhaltsstoffträger befüllte Dispergier- und Extrahierbehälter 1, 1' mit einem Inertgas (zum Beispiel CO₂ oder N₂) gespült. Dazu wird das Inertgas aus dem Inertgasvorratsbehälter 4 durch die Inertgasleitung 40 und den Inertgaseinlass 42 von unten in den Prozessraum 13 eingeleitet. Das Inertgas treibt dabei auf allgemein bekannte Weise die Luft aus dem Prozessraum 13, beispielsweise durch die Einfüllöffnung 15, hinaus, so dass im Prozessraum 13 eine sauerstofffreie Schutzgasatmosphäre gebildet wird, die eine Oxidation der Inhaltsstoffträger verhindert. Die Einfüllöffnung 15 wird daraufhin mit dem Deckel 14 gasdicht verschlossen.

Dann wird in einem weiteren Schritt 103 der Dispergier- und Extrahierbehälter 1, 1' mit Brauflüssigkeit, zum Beispiel mit Bier, Jungbier oder Wasser, befüllt. Dazu wird die Brauflüssigkeit aus dem Vorratsbehälter 2 bei geöffnetem Absperrventil 21 durch die Leitung 20 und den im Behälterboden 12 vorgesehenen Fluidanschluss 22 in den Prozessraum 13 eingeleitet. Auf diese Weise wird die vorgegebene Menge pflanzlicher Inhaltsstoffträger im Prozessraum 13 des Dispergier- und Extrahierbehälters 1 beziehungsweise 1' mit einem vorgegebenen Volumen frischer Brauflüssigkeit in Kontakt gebracht. Unter dem Begriff "frische Brauflüssigkeit" ist hier eine Brauflüssigkeit (Bier, Jungbier oder Wasser) zu verstehen, die vorher noch nicht mit den pflanzlichen Inhaltsstoffträgern im intensiveren Kontakt gestanden ist oder noch keinen oder einen unwesentlichen Anteil der zu transferierenden Inhaltsstoffe aufweist.

Mittels des Rührpropellers 32 der Rühreinrichtung 3 wird ausschließlich im Schritt 104 im Prozessraum 13 eine Erst-Suspension aus der frischen Brauflüssigkeit und den pflanzlichen Inhaltsstoffträgern erzeugt, indem sich die pflanzlichen Inhaltsstoffträger in der Brauflüssigkeit möglichst gleichmäßig verteilen oder darin auflösen. Anstelle der in Fig. 1 und Fig. 2 gezeigten Rühreinrichtung 3 des Dispergierbehälters 1, 1' - oder zusätzlich dazu - kann auch die Umwälzleitung 24 mit der Umwälzpumpe 25 für die Suspension vorgesehen sein, wodurch eine optimale Vermischung von Brauflüssigkeit und Inhaltsstoffträgern nicht durch Rühren, sondern durch Umwälzen erzielt wird.

In einer ersten Untervariante A des in Fig. 3 dargestellten nichterfindungsgemäßen Verfahrens wird die Vorrichtung gemäß Fig. 1 verwendet. Nach einer vorgegebenen Zeitspanne des Rührens oder Umwälzens wird vorzugsweise die Rühreinrichtung 3 beziehungsweise die Umwälzpumpe 25 angehalten und es beginnt in der Suspension ein Prozess der Schwerkraftabscheidung, bei dem sich schnell eine Phasengrenze zwischen in der Suspension enthaltenen Feststoffen der pflanzlichen Inhaltsstoffträger und der geklärten Brauflüssigkeit ausbildet. Die Feststoffe sedimentieren oder schwimmen auf und währenddessen kann aber bereits der Auslass 28 geöffnet werden. Das heißt, die geklärte Brauflüssigkeit kann im Bereich der sich im Dispergierbehälter abtrennenden geklärten Brauflüssigkeit bereits durch die seitliche Siebfläche 16 hindurch zum Auslass 28 fließen, während die Feststoffe sedimentieren (beziehungsweise aufschwimmen) und dort die Siebfläche verlegen und somit blockieren. Das Abziehen der geklärten Brauflüssigkeit durch die Fest-Flüssig-Trenneinrichtung 17, 17' kann aber auch während des Rührens oder Umwälzens erfolgen. Das sich hinter der jeweiligen Fest-Flüssig-Trenneinrichtung 17, 17' im oberen Filtrat-Sammelraum 18 und im unteren Filtrat-Sammelraum 18' sammelnde Filtrat, also die mit den wertgebenden Inhaltsstoffen aus den Inhaltsstoffträgern angereicherte (zum Beispiel aromatisierte) Brauflüssigkeit, die durch die Siebeinrichtungen 16 beziehungsweise 16' von den Feststoff-Partikeln befreit worden ist, wird in dem auf den Schritt 104 folgenden Schritt 105 durch den jeweiligen Auslass 28, 28' und durch die Abflussleitung 27, 27' abgezogen und zurück in den Vorratsbehälter 2 oder einen anderen Vorratsbehälter abgeführt.

In einer zweiten Untervariante B des in Fig. 3 dargestellten nichterfindungsgemäßen Verfahrens, die mit der in Fig. 2 gezeigten Vorrichtung durchgeführt wird, wird nach dem Schritt 104, in welchem die Inhaltsstoffträger mittels des Rührwerks 3 dispergiert und die wertgebenden Inhaltsstoffe aus den Inhaltsstoffträgern extrahiert werden, das Rührwerk 3 abgeschaltet und es wird eine explizite Sedimentationspause für einen vorgegebenen Pausenzeitraum eingelegt, damit sich die in der Suspension im Prozessraum 13 enthaltenen Feststoffe nach unten absetzen können (Schritt 104'). Nach dem Ende der Sedimentationspause wird die sich im oberen Teil des Prozessraums 13 sammelnde, geklärte und mit wertgebenden Inhaltsstoffen angereicherte Brauflüssigkeit durch den Rohrarm 19 abgezogen und durch den Fluidanschlussauslass 28" in die Abflussleitung 27 und durch diese zurück zum Vorratsbehälter 2 oder zu einem anderen Vorratsbehälter geleitet (Schritt 105'). Nachdem die angereicherte Brauflüssigkeit im Schritt 105 beziehungsweise 105' aus dem Prozessraum 13 abgezogen worden ist, springt das Verfahren im Schritt 106 zurück zum Schritt 103, was durch den Rückführpfeil C symbolisiert ist. Es werden daraufhin die Schritte 103, 104, 105 (bei der Untervariante A) beziehungsweise 103, 104, 104', 105' (bei der Untervariante B) erneut durchgeführt. Der durch den Pfeil C symbolisierte Rücksprung des Verfahrens kann einmal oder mehrmals durchgeführt werden, solange noch ausreichend wertgebende Inhaltsstoffe in den im Prozessraum 13 enthaltenen pflanzlichen Inhaltsstoffträgern enthalten sind, um einen wirksamen Inhaltsstoffübergang aus den pflanzlichen Inhaltsstoffträgern in die neu zugeführte frische Brauflüssigkeit zu bewirken.

Es wird also die in den Schritten 103 und 104 mit den wertgebenden Inhaltsstoffen angereicherte Brauflüssigkeit nach einer ersten vorgegebenen Zeitspanne aus dem Dispergier- und Extrahierbehälter 1 abgezogen, wobei jedoch die pflanzlichen Inhaltsstoffträger im Dispergier- und Extrahierbehälter 1 verbleiben. Danach wird weitere frische Brauflüssigkeit in den Dispergier- und Extrahierbehälter im Schritt 103 eingespeist und im Schritt 104 eine Zweit-Suspension erzeugt. Nach einer weiteren vorgegebenen Zeitspanne, die vom Schritt 104 umfasst wird und in der der Inhaltsstoffübergang aus den pflanzlichen Inhaltsstoffträgern in die Brauflüssigkeit erfolgt, wird die mit wertgebenden Inhaltsstoffen angereicherte Brauflüssigkeit im Schritt 105 beziehungsweise 105' aus dem Dispergier- und Extrahierbehälter 1 abgezogen, wobei auch diesmal die pflanzlichen Inhaltsstoffträger im Dispergier- und Extrahierbehälter verbleiben.

Vorteilhafterweise wird beim letzten rekursiven Schritt 103 des Einspeisens von weiterer frischer Brauflüssigkeit in den Dispergier- und Extrahierbehälter 1 Wasser als Brauflüssigkeit verwendet, um in den im Prozessraum 13 verbliebenen pflanzlichen Inhaltsstoffträgern enthaltenes Bier oder Jungbier auszuspülen und dadurch die Bierausbeute zu verbessern.

Nach dem letzten rekursiven Durchgang durch die Verfahrensschritte 103, 104, 105 beziehungsweise 103, 104, 104' und 105' wird der Feststoff, also die ausgelaugten pflanzlichen Inhaltsstoffträger, durch eine (in den Figuren nicht gezeigte) Austragsöffnung aus dem Dispergier- und Extrahierbehälter 1, 1' ausgetragen (Schritt 107). In einem darauffolgenden Schritt 108 erfolgt eine CIP-Reinigung des Dispergier- und Extrahierbehälters 1, 1'.

Zur Durchführung dieses Verfahrens bilden die Absperrventile 21, 29, 29' beziehungsweise 29" und vorzugsweise auch das Absperrventil 41 Steuerungsmittel, die zur Steuerung der Schritte des Verfahrens ausgebildet sind. Die Absperrventile werden dabei derart gesteuert, dass die Verfahrensschritte in der richtigen Reihenfolge und mit dem richtigen Zeitabstand durchgeführt werden. Auch die Pumpe 25 und das Rührwerk 3 können in die Steuerung einbezogen werden und jeweils ein weiteres Steuerungsmittel bilden. Auch wenn die genannten Steuerungsmittel manuell geschaltet werden können, so ist es doch vorteilhaft, wenn eine Steuerungseinrichtung 9 vorgesehen ist, die beispielsweise einen Steuerungscomputer 90 aufweist und die entsprechend einem Computerprogramm Steuerungsbefehle an die Steuerungsmittel zur Ausführung des jeweiligen Verfahrens sendet. Eine solche Steuerungseinrichtung ist beispielhaft in Fig. 1 schematisch dargestellt, sie kann aber auch in den Ausführungsformen, die in den anderen Figuren gezeigt sind, vorgesehen sein.

Fig. 4 zeigt einen schematischen Aufbau einer erfindungsgemäßen Variante der Vorrichtung, bei der keine batchweise Anreicherung einer Brauflüssigkeit mit wertgebenden Inhaltsstoffen durchgeführt wird (wie bei den Varianten der Fig. 1 und Fig. 2), sondern eine Inline-Anreicherung erfolgt. Dazu wird eine hochkonzentrierte Suspension aus einer Brauflüssigkeit und darin dispergierten Inhaltsstoffträgern von einem in Fig. 4 nur schematisch dargestellten Vorratsbehälter 6 für den Suspensionsvorrat durch eine Transportleitung 60 zu einer Fest-Flüssig-Trenneinrichtung 62 geleitet. Eine frische Brauflüssigkeit wird aus einem Brauflüssigkeitsvorratsbehälter 7 durch eine Brauflüssigkeitszuführleitung 70, die in die Transportleitung 60 einmündet, in den in der Transportleitung 60 transportierten Suspensionsstrom eingeleitet. Die Stoffströme durch die Transportleitung 60 und die Brauflüssigkeitszuführleitung 70 sind vorzugsweise mittels (nicht gezeigter) Steuer- oder Regelventile) zueinander einstellbar, um ein definiertes Mischungsverhältnis erzielen zu können. Auch diese Steuer- oder Regelventil werden bevorzugt vom Steuerungscomputer 90 der Steuerungseinrichtung 9 zum Zweck der Durchführung der Schritte des jeweiligen erfindungsgemäßen Verfahrens gesteuert oder geregelt.

Im Beispiel der Fig. 4 ist in der Transportleitung 60 hinter dem Einmündungspunkt 72 der Brauflüssigkeitszuführleitung 70 eine Misch- und/oder Reaktionseinrichtung 64 vorgesehen. In dieser Misch- und/oder Reaktionseinrichtung 64 ist (in Strömungsrichtung) zunächst ein statischer Mischer 65 und diesem nachgeschaltet eine beispielsweise von einem Rohrregister gebildete Reaktionsstrecke 66 vorgesehen. Von der Reaktionsstrecke 66 verläuft ein Endabschnitt 60' der Transportleitung 60 zur Fest-Flüssig-Trenneinrichtung 62. Die Fest-Flüssig-Trenneinrichtung 62 weist einen ersten Auslass 62' für ein von Feststoffen befreites Filtrat sowie einen Auslass 62" für Feststoffe auf. Vom ersten Auslass 62' der Fest-Flüssig-Trenneinrichtung 62 verläuft eine Ablaufleitung 63 zu einem Vorratsbehälter 68 für das Filtrat, also für die mit wertgebenden Inhaltsstoffen angereicherte Brauflüssigkeit. Der Feststoffauslass 62" der Fest-Flüssig-Trenneinrichtung 62 ist über eine Feststoffaustragsleitung 67 mit einem Feststoffsammelgefäß 69 verbunden.

Der im Bereich der Einmündung 72 der Brauflüssigkeitszuführleitung 70 in die Transportleitung 60 entstehende verdünnte Substratstrom wird zur Fest-Flüssig-Trenneinrichtung 62 geleitet (Verfahrensschritt a' in Anspruch 1), wo die Feststoffe der pflanzlichen Inhaltsstoffträger aus der Suspension abgeschieden werden (Verfahrensschritt c' in Anspruch 1). Auf diesem Transportweg wird frische Brauflüssigkeit in den in der Transportleitung 60 fließenden Suspensionsstrom eingeleitet (Verfahrensschritt b' in Anspruch 1).

Um für den Inhaltsstofftransport aus den Inhaltsstoffträgern in die Brauflüssigkeit ausreichend Zeit zur Verfügung zu haben, ist im Beispiel der Fig. 4 die - an sich optionale - Misch- und/oder Reaktionseinrichtung 64 vorgesehen. Die verdünnte Suspension wird darin zunächst durch den statischen Mischer 65 geleitet, um eine optimale Durchmischung der pflanzlichen Inhaltsstoffträger mit der dem Suspensionsstrom hinzugeführten frischen Brauflüssigkeit zu erzielen. Die im statischen Mischer 65 so erzeugte neue, im Wesentlichen homogene Suspension durchfließt dann die Reaktionsstrecke 66 und erhält dadurch eine ausreichende Verweilzeit, die für einen optimalen Stoffübergang der wertgebenden Inhaltsstoffe aus den Inhaltsstoffträgern in die Brauflüssigkeit vorteilhaft ist.

In der nachgeschalteten Fest-Flüssig-Trennvorrichtung 62 werden anschließend die pflanzlichen Inhaltsstoffträger aus der Suspension abgeschieden (Verfahrensschritt c' in Anspruch 1) und die mit den wertgebenden Inhaltsstoffen angereicherte Brauflüssigkeit wird aus der Vorrichtung abgeführt (Verfahrensschritt d' im Anspruch 1) und dem Vorratsbehälter 68 für angereicherte Brauflüssigkeit zugeführt.

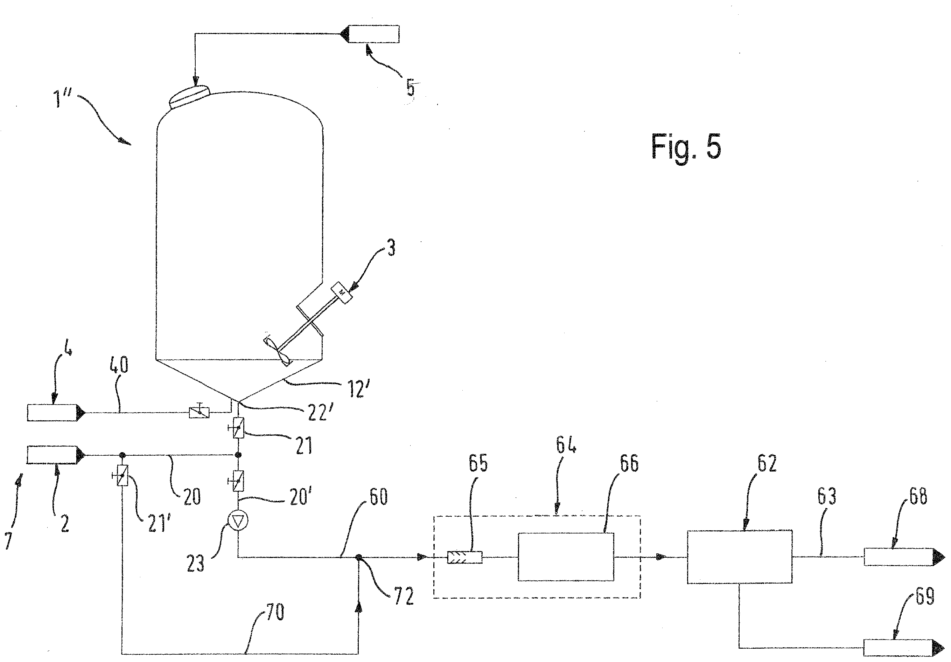

Fig. 5 zeigt die Vorrichtung aus Fig. 4 mit einem Dispergierbehälter 1", in dem die hochkonzentrierte Suspension erzeugt wird, die über die Transportleitung 60 zur Einmündung 72 der Brauflüssigkeitszuführleitung 70 geführt wird. Der Dispergierbehälter 1" bildet somit den Vorratsbehälter 6 für die hochkonzentrierte Suspension. Der Aufbau des Dispergierbehälters 1" entspricht im Wesentlichen dem Aufbau des in Verbindung mit Fig. 2 beschriebenen Dispergier- und Extrahierbehälters, allerdings fehlt dem Dispergierbehälter 1" der Rohrarm 19 und der Auslass 28". Im Dispergierbehälter 1" wird, wie dies in Verbindung mit Fig. 3 in den Schritten 101 bis 104 beschrieben worden ist, eine Dispersion aus Inhaltsstoffträgern und frischer Brauflüssigkeit mittels des Rührwerks 3 durchgeführt, wobei in geringem Maße auch bereits wertgebende Inhaltsstoffe aus den pflanzlichen Inhaltsstoffträgern in die Brauflüssigkeit extrahiert werden. Anstelle der in Fig. 5 gezeigten Rühreinrichtung 3 des Dispergierbehälters 1" (oder zusätzlich dazu) kann auch eine Umwälzleitung mit einer Umwälzpumpe für die Suspension vorgesehen sein, wodurch eine optimale Vermischung von Brauflüssigkeit und Inhaltsstoffträgern nicht durch Rühren, sondern durch Umwälzen erzielt wird.

Der untere Fluidanschluss 22' im Bereich der unteren Spitze des kegelförmigen Behälterbodens 12' des Dispergierbehälters 1" dient sowohl zum Befüllen des Dispergierbehälters 1" mit frischer Brauflüssigkeit aus dem Brauflüssigkeitsvorrat 2, wie dies in Verbindung mit den Fig. 1 und 2 beschrieben worden ist, und gleichzeitig dient der Fluidanschluss 22' als Auslauf für die im Dispergierbehälter 1" erzeugte Suspension. Dafür ist der Fluidanschluss 22' über eine Ablaufleitung 20', in der eine Substratförderpumpe 23 vorgesehen ist, mit der Förderleitung 60 verbunden. Die Brauflüssigkeitszuführleitung 70 ist über ein Absperrventil 21' mit der Zulaufleitung 20 für die frische Brauflüssigkeit verbunden.

Das mit der in Fig. 5 gezeigten Vorrichtung durchführbare Verfahren entspricht dem, welches in Verbindung mit der Fig. 4 beschrieben worden ist. Es umfasst somit ein Zuführen der Suspension zur Fest-Flüssig-Trenneinrichtung 62 (Verfahrensschritt a') in Anspruch 1), ein Einleiten frischer Brauflüssigkeit (an der Einmündung 72) in die Suspension auf ihrem Weg zur Fest-Flüssig-Trenneinrichtung 62 (Verfahrensschritt b' in Anspruch 1), ein Abscheiden der pflanzlichen Inhaltsstoffträger aus der Suspension in der Fest-Flüssig-Trenneinrichtung 62 (Verfahrensschritt c' in Anspruch 1) und ein Abführen der mit wertgebenden Inhaltsstoffen angereicherten Brauflüssigkeit aus der Fest-Flüssig-Trenneinrichtung 62 (durch die Ablaufleitung 63) zur weiteren Verwendung (Verfahrensschritt d' in Anspruch 1).

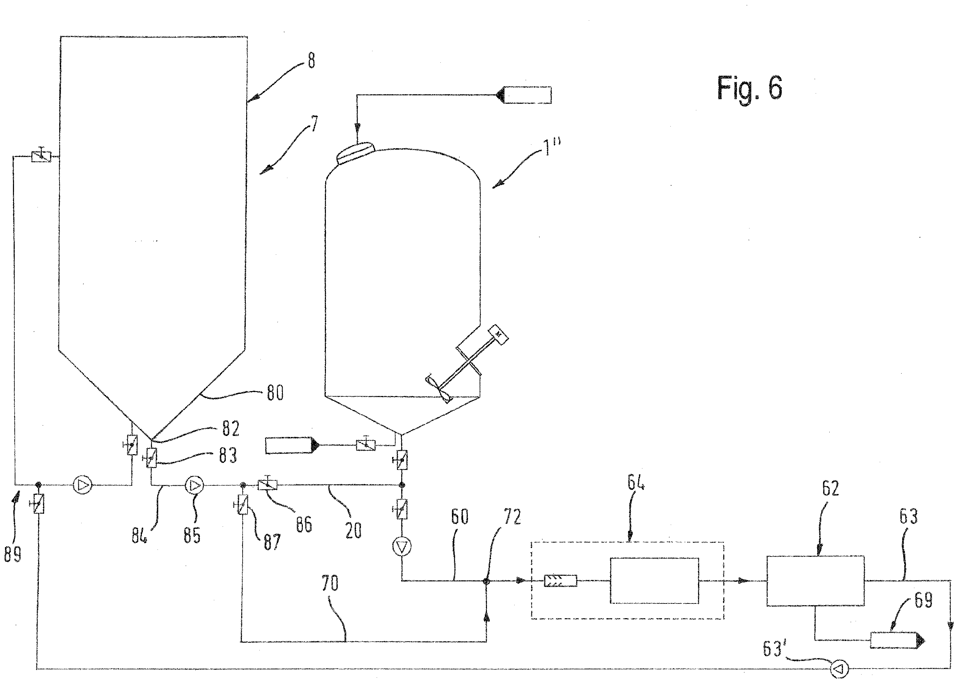

Fig. 6 zeigt die in Verbindung mit Fig. 5 beschriebene Vorrichtung integriert in den Kaltbereich einer Brauereianlage. Ein Lagertank 8 für Bier oder Jungbier bildet hier den Vorratsbehälter 7 für die frische, noch nicht mit den wertgebenden Inhaltsstoffen angereicherte Brauflüssigkeit, also im gezeigten Beispiel für das Bier oder Jungbier. Der Lagertank 8 weist einen konusförmigen Behälterboden 80 auf, an dessen unterer Spitze ein Auslauf 82 für die im Lagertank enthaltene frische Brauflüssigkeit vorgesehen ist. An den Auslauf 82 ist eine mittels eines Ventils 83 absperrbare Brauflüssigkeitsleitung 84 angeschlossen, in der eine Förderpumpe 85 vorgesehen ist und die in die Zulaufleitung 20 für frische Brauflüssig hinter einem weiteren Absperrventil 86 mündet. Vor dem weiteren Absperrventil 86 zweigt von der Brauflüssigkeitsleitung 84 - ebenfalls mittels eines Ventils 87 absperrbar - die Brauflüssigkeitszuführleitung 70 für frische Brauflüssigkeit ab.

Die Ablaufleitung 63 für das aus der Fest-Flüssig-Trenneinrichtung 62 abgeführte Filtrat, also für die mit den wertgebenden Inhaltsstoffen angereicherte Brauflüssigkeit, beispielsweise die aromatisierte Brauflüssigkeit, bildet im Beispiel der Fig. 6 eine mit einer Förderpumpe 63' versehene Rücklaufleitung, die zu einem Umwälzkreislauf 89 des Lagertanks 8 führt, so dass die mit den wertgebenden Inhaltsstoffen angereicherte Brauflüssigkeit zurück in den Lagertank 8 geführt wird, wo sie sich mit der darin noch vorhandenen frischen Brauflüssigkeit vermischt. Durch diese Vermischung sinkt die Konzentration der wertgebenden Inhaltsstoffe in der Brauflüssigkeit deutlich ab, so dass für die Zwecke der vorliegenden Beschreibung die im Lagertank 8 enthaltene und durch die Brauflüssigkeitsleitung 84 der erfindungsgemäßen Vorrichtung zugeführte Brauflüssigkeit weiterhin als "frische Brauflüssigkeit" bezeichnet werden kann, da deren Konzentration der wertgebenden Inhaltsstoffe gegenüber der in den Inhaltsstoffträgern und in der mit diesen im Dispergierbehälter 1" gebildeten Suspension vernachlässigbar gering ist, so dass noch ein für einen wirksamen Transport der wertgebenden Inhaltsstoffe ausreichendes Konzentrationsgefälle von wertgebenden Inhaltsstoffen im Hinblick auf die "frische Brauflüssigkeit" besteht.

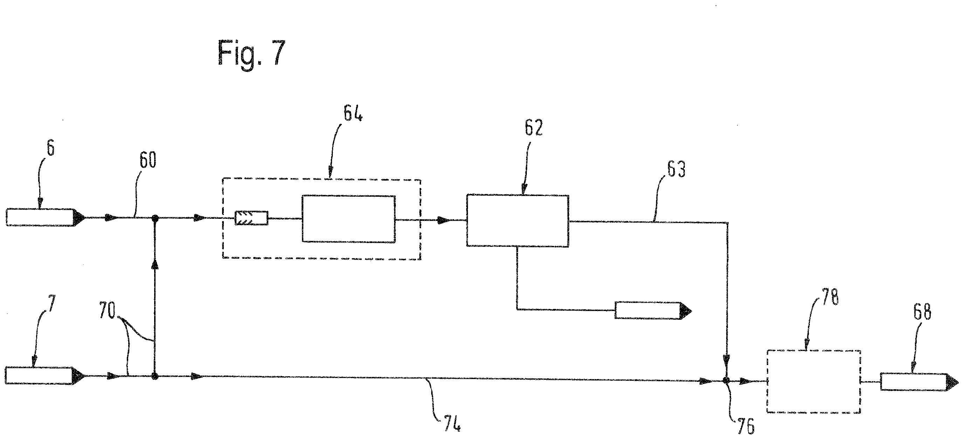

Fig. 7 zeigt eine Untervariante der in Verbindung mit Fig. 4 beschriebenen erfindungsgemäßen Vorrichtung zur Extraktion von wertgebenden Inhaltsstoffen aus pflanzlichen Inhaltsstoffträgern in eine Brauflüssigkeit, die ebenfalls für die Durchführung der zweiten Variante des Verfahrens, wie sie im Anspruch 6 beansprucht ist, vorgesehen ist. Im grundsätzlichen Aufbau entspricht die in Fig. 7 gezeigte Vorrichtung jener aus Fig. 4, wobei allerdings die Brauflüssigkeitszuführleitung 70 für frische Brauflüssigkeit mit der Ablaufleitung 63 durch eine Brauflüssigkeitstransportleitung 74 verbunden ist. Am Ort 76 der Einmündung der Ablaufleitung 63 in die Brauflüssigkeitstransportleitung 74 wird die durch die Brauflüssigkeitstransportleitung 74 heranströmende frische Brauflüssigkeit mit durch die Ablaufleitung 63 anströmender aromatisierter Brauflüssigkeit, also mit der mit wertgebenden Inhaltsstoffen angereicherten Brauflüssigkeit, vermischt. Um eine möglichst homogene Durchmischung zu erzielen, kann in Strömungsrichtung hinter dem Einmündungsort 76 eine Mischeinrichtung 78 vorgesehen sein, durch die hindurch die Brauflüssigkeit dann in den Vorratsbehälter 68 für aromatisierte Brauflüssigkeit geleitet wird.

Bei der Kalthopfung kann es vorkommen, dass neben den Aromen auch Enzyme aus dem Hopfen heraus extrahiert werden. Diese unter anderem amylolytischen Enzyme können bewirken, dass im Bier vorhandene und eigentlich für die Hefe nicht vergärbare langkettige Dextrine zu wieder von der Hefe vergärbaren Zuckern abgebaut werden. Eine dadurch hervorgerufene Nachgärung kann unerwünschte Veränderungen im Alkoholgehalt, im Diacetylgehalt und im CO₂-Gehalt des Bieres bewirken. Dieser Effekt wird auch "Hop Creep Effekt" genannt. Die dadurch hervorgerufenen Veränderungen können insbesondere dann zu Problemen führen, wenn diese Veränderungen erst in der Flasche nach dem Inverkehrbringen auftreten. Zur Vermeidung solcher Probleme und zur allgemeinen Haltbarmachung von Bier werden hierfür in der Praxis häufig unmittelbar vor, während, oder nach der Abfüllung thermische Verfahren zur Pasteurisierung des Biers eingesetzt. Diese inaktiveren Enzyme, Hefen und ähnliches und unterbinden eine nachträgliche Veränderung des Bieres.

Um eine solche Pasteurisierung besonders wirksam auch mit dem erfindungsgemäßen Inline-Verfahren und den diesem Inline-Verfahren zugeordneten erfindungsgemäßen Vorrichtungen gemäß der Fig. 4 bis 7 durchführen zu können, ist vorteilhafterweise eine integrierte Kurzzeiterhitzungseinrichtung vorgesehen, mit der eine Kurzzeiterhitzung (KZE) der Suspension inline im Durchlaufbetrieb als Verfahren zur thermischen Haltbarmachung durchgeführt werden kann.

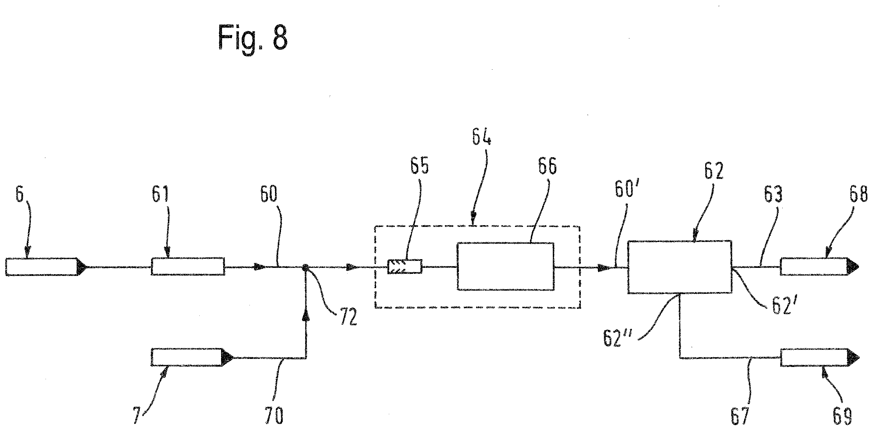

Fig. 8 zeigt in schematischer Darstellung eine diesbezügliche ersten Abwandlung der in Fig. 4 dargestellten dritten erfindungsgemäßen Vorrichtung. Zwischen dem Vorratsbehälter 6 für Suspensionsvorrat und der Misch- und/oder Reaktionseinrichtung 64 ist - im gezeigten Beispiel in Strömungsrichtung der durch die Transportleitung 60 strömenden kalten Suspension vor der Einmündung 72 - eine Kurzzeiterhitzungseinrichtung 61 in zumindest einem Abschnitt der Transportleitung 60 vorgesehen, mittels der die in der Transportleitung 60 strömende Suspension zur Pasteurisierung erhitzt, für eine vorgegebene Zeit auf einem vorgegebenen Temperaturniveau gehalten werden und dann wieder abgekühlt werden kann. Die Kurzzeiterhitzungseinrichtung 61 kann alternativ oder zusätzlich auch in Strömungsrichtung hinter der Einmündung 72 vorgesehen sein.

Beispielsweise weist die Kurzzeiterhitzungseinrichtung 61 einen ersten Wärmetauscher zur Erwärmung der Suspension und einen zweiten Wärmetauscher zur konstanten Heißhaltung auf. Die anströmende kalte Suspension wird mittels des ersten Wärmetauschers auf eine vorgegebene Temperatur erhitzt und fließt dann durch eine Heißhaltestrecke, die von einer längeren Rohrleitung eines zweiten Wärmetauschers gebildet ist, in dem temperiertes Wasser, vorzugsweise im Gegenstrom zur Suspension, fließt. Die Länge dieser Rohrleitung bestimmt zusammen mit der Strömungsgeschwindigkeit der Suspension die für eine Pasteurisierung erforderliche Heißhaltezeit. Am Ende der Heißhaltestrecke wird die heiße Suspension - vorzugsweise im Gegenstrom zur kalten Suspension - durch den ersten Wärmetauscher geleitet, wobei die pasteurisierte Suspension wieder abgekühlt wird.

Die mit dieser Variante aus Fig. 8 zu erzielenden Vorteile liegen darin, kleine Volumenströme vorsehen zu können und damit eine kleinere und günstigere Anlagentechnik bereitstellen zu können. Die Anordnung der Kurzzeiterhitzungseinrichtung 61 vor der Einmündung 72 verhindert zudem eine übermäßige thermische Belastung des restlichen Bieres, welches zur Rückverdünnung herangezogen wird und erst bei der Einmündung 72 in die Transportleitung 60 einströmt. Ein weiterer positiver Nebeneffekt besteht darin, dass die höhere Temperatur den Aromatransfer bereits in der hochkonzentrierten Suspension im Idealfall so beschleunigt, dass anschließend weniger Bier zur Rückverdünnung benötigt wird um das Aroma vollständig zu transferieren (beispielsweise eine Rückverdünnung nicht mehr von 6,5 Masse-% auf 1,5 Masse-% sondern nur noch von 6,5 Masse-% auf 3,0 Masse-%).

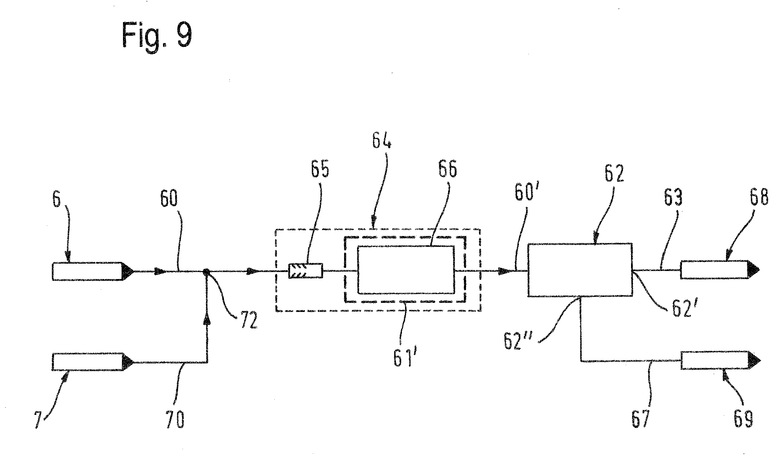

Im Beispiel der Fig. 9 ist die in der gleichen Weise aufgebaute und funktionierende Kurzzeiterhitzungseinrichtung 61' in die Misch- und/oder Reaktionseinrichtung 64 integriert vorgesehen, wo sie die in der Reaktionsstrecke 66 strömende Suspension pasteurisieren kann. Es ist auch möglich, die Varianten der Fig. 8 und 9 miteinander zu kombinieren und Kurzzeiterhitzungseinrichtungen sowohl vor der Misch- und/oder Reaktionseinrichtung 64 als auch in der Misch- und/oder Reaktionseinrichtung 64 integriert vorzusehen.

Die mit der Variante aus Fig. 9 zu erzielenden Vorteile bestehen darin, dass die für den Stofftransfer innerhalb der Misch- und/oder Reaktionseinrichtung 64 vorgesehene Reaktionsstrecke 66 zugleich als Heißhaltestrecke genutzt wird. Bei dieser Variante aus Fig. 9 und bei der Variante aus Fig. 8 mit einer hinter der Einmündung 72 angeordneten Kurzzeiterhitzungseinrichtung wird das Bier vollständig thermisch behandelt, was zu einer höheren Sicherheit im Hinblick auf die chemisch-physikalische Stabilität des Biers führt und damit dessen Haltbarkeit verbessert. Dadurch, dass hierbei die Hopfensuspension schon rückverdünnt wurde, ist der Konzentrationsgradient bereits für den Aromatransfer in der Reaktionsstrecke 66 optimiert. Zusätzlich beschleunigt die höhere Temperatur (zum Beispiel etwa 70 °C bis 80 °C) auch hier den Stofftransfer, was zu einer noch effizienteren Extraktion der Aromastoffe führen kann.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Dispergier- und Extrahierbehälter
- 1': Dispergier- und Extrahierbehälter
- 1": Dispergierbehälter
- 2: Vorratsbehälter
- 3: Rühreinrichtung
- 4: Inertgasvorratsbehälter
- 5: Inhaltsstoffträgervorrat
- 6: Vorratsbehälter für Suspensionsvorrat
- 7: Brauflüssigkeitsvorratsbehälter
- 8: Lagertank
- 9: Steuerungseinrichtung
- 10: zylindrische Umfangswand
- 11: kuppelartige Deckenwand
- 12: kegelförmiger Behälterboden
- 12': kegelförmiger Behälterboden
- 12": Auslass
- 13: Prozessraum
- 14: Deckel
- 15: Einfüllöffnung
- 16: Siebeinrichtung
- 16': Siebeinrichtung
- 17: obere Fest-Flüssig-Trenneinrichtung
- 17': untere Fest-Flüssig-Trenneinrichtung
- 18: oberer Filtrat-Sammelraum
- 18': unterer Filtrat-Sammelraum
- 19: Rohrarm
- 20: Zulaufleitung
- 20': Ablaufleitung
- 21: Absperrventil
- 21': Absperrventil
- 22: Fluidanschluss
- 22': Fluidanschluss
- 23: Substratförderpumpe
- 24: Umwälzleitung
- 24': Abzweig
- 25: Umwälzpumpe
- 26: Zulauf in Prozessraum 13
- 27: Abflussleitung
- 27': untere Abflussleitung
- 27": Abflussleitung
- 28: Auslass
- 28': Auslass
- 28": Fluidanschlussauslass
- 29: Absperrventil
- 29': Absperrventil
- 30: Rührantrieb
- 31: Rührwelle
- 32: Rührpropeller
- 40: Inertgasleitung
- 41: Absperrventil
- 42: Inertgaseinlass
- 60: Transportleitung
- 60': Endabschnitt der Transportleitung 60
- 61: Kurzzeiterhitzungseinrichtung
- 61': Kurzzeiterhitzungseinrichtung
- 62: Fest-Flüssig-Trenneinrichtung
- 62': erster Auslass
- 62": Feststoffauslass
- 63: Ablaufleitung
- 63': Förderpumpe
- 64: Misch- und/oder Reaktionseinrichtung
- 65: statischer Mischer
- 66: Reaktionsstrecke
- 67: Feststoffaustragsleitung
- 68: Vorratsbehälter
- 69: Feststoffsammelgefäß
- 70: Brauflüssigkeitszuführleitung
- 72: Einmündung
- 74: Brauflüssigkeitstransportleitung
- 76: Ort der Einmündung der Ablaufleitung 63
- 78: Mischeinrichtung
- 80: konusförmiger Behälterboden
- 82: Auslauf
- 83: Ventil
- 84: Brauflüssigkeitsleitung
- 85: Förderpumpe
- 86: Absperrventil
- 87: Ventil
- 89: Umwälzkreislauf
- 90: Steuerungscomputer
- 101: Verfahrensschritt
- 103: Verfahrensschritt
- 104: Verfahrensschritt
- 104': Verfahrensschritt
- 105: Verfahrensschritt
- 105': Verfahrensschritt

- A: erste Untervariante
- B: zweite Untervariante
- C: Rückführpfeil
- X: Drehachse von 19

## Patentansprüche

1. Verfahren zur Extraktion von wertgebenden Inhaltsstoffen aus pflanzlichen Inhaltsstoffträgern in eine Brauflüssigkeit, wobei eine Suspension aus einer frischen Brauflüssigkeit und pflanzlichen Inhaltsstoffträgern erzeugt wird, wobei sich die pflanzlichen Inhaltsstoffträger zumindest teilweise in der Suspension verteilen oder auflösen, wobei wertgebende Inhaltsstoffe aus den pflanzlichen Inhaltsstoffträgern in die Brauflüssigkeit übergehen, **gekennzeichnet durch die Schritte**
a') Zuführen der Suspension zu einer Fest-Flüssig-Trenneinrichtung (62);
b') Einleiten frischer Brauflüssigkeit im Inline-Betrieb in die Suspension auf ihrem Weg zur Fest-Flüssig-Trenneinrichtung (62);
c') Abscheiden der pflanzlichen Inhaltsstoffträger aus der Suspension in der Fest-Flüssig-Trenneinrichtung (62) und
d') Abführen der mit wertgebenden Inhaltsstoffen angereicherten Brauflüssigkeit aus der Fest-Flüssig-Trenneinrichtung (62) zur weiteren Verwendung und
e') Abführen der im Schritt c') aus der Suspension abgeschiedenen pflanzlichen Inhaltsstoffträger aus der Fest-Flüssig-Trenneinrichtung (62) in ein Feststoffsammelgefäß (69).

2. Verfahren nach Anspruch 1,
**dadurch gekennzeichnet,**
**dass** die im Schritt b') mit frischer Brauflüssigkeit versetzte Suspension durch eine Misch- und/oder Reaktionseinrichtung (64) hindurchgeleitet wird, bevor sie zur Fest-Flüssig-Trenneinrichtung (62) gelangt.

3. Verfahren nach Anspruch 2,
**dadurch gekennzeichnet,**
**dass** die im Schritt b') in die Suspension eingeleitete frische Brauflüssigkeit Bier oder Jungbier ist, das aus einem Lagertank (8) für Bier oder Jungbier bezogen wird und
**dass** die im Schritt d') aus der Fest-Flüssig-Trenneinrichtung (62) abgeführte und mit wertgebenden Inhaltsstoffen angereicherten Brauflüssigkeit in den Lagertank (8) zurück geleitet wird.

4. Verfahren nach einem der Ansprüche 1 bis 3,
**dadurch gekennzeichnet,**
**dass** die im Schritt d') aus der Fest-Flüssig-Trenneinrichtung (62) abgeführte und mit wertgebenden Inhaltsstoffen angereicherte Brauflüssigkeit mit frischer Brauflüssigkeit vermischt und dann in einen Vorratsbehälter (68) für aromatisierte Brauflüssigkeit geleitet wird.

5. Verfahren nach einem der Ansprüche 1 bis 4,
**dadurch gekennzeichnet,**
**dass** zur Erzeugung der Erst-Suspension aus der frischen Brauflüssigkeit und pflanzlichen Inhaltsstoffträgern eine vorgegebene Menge pflanzlicher Inhaltsstoffträger in einem Dispergierbehälter (1") mit einem vorgegebenen Volumen frischer Brauflüssigkeit in Kontakt gebracht wird und sich die pflanzlichen Inhaltsstoffträger unter Ausbildung der Erst-Suspension zumindest teilweise darin verteilen oder auflösen.

6. Verfahren nach einem der vorhergehenden Ansprüche,
**dadurch gekennzeichnet,**
**dass** die Extraktion von wertgebenden Inhaltsstoffen aus pflanzlichen Inhaltsstoffträgern in eine Brauflüssigkeit im Kaltbereich einer Brauanlage durchgeführt wird.

7. Verfahren nach einem der vorhergehenden Ansprüche,
**dadurch gekennzeichnet,**
**dass** die pflanzlichen Inhaltsstoffträger von Hopfen oder Hopfenprodukten und/oder von pflanzlichen Aromaträgern gebildet sind .

8. Verfahren nach einem der vorhergehenden Ansprüche,
**dadurch gekennzeichnet,**
**dass** die wertgebenden Inhaltsstoffe von Bitterstoffen, insbesondere von alpha-Säuren, beta-Säuren und/oder Linalool, von Aromastoffen, insbesondere von ätherischen Ölen, und/oder von Polyphenolen gebildet sind.

9. Vorrichtung zur Extraktion von wertgebenden Inhaltsstoffen aus pflanzlichen Inhaltsstoffträgern in eine Brauflüssigkeit im Inline-Betrieb gemäß einem Verfahren nach Anspruch 1, mit einer Transportleitung (60) für eine Suspension aus einer Brauflüssigkeit und pflanzlichen Inhaltsstoffträgern, die von einer Suspensionsquelle (6, 1") zu einer Fest-Flüssig-Trenneinrichtung (62) führt, **dadurch gekennzeichnet,**
**dass** weiterhin eine Zuführleitung (70) für frische Brauflüssigkeit vorgesehen ist, die in die Transportleitung (60) einmündet.

10. Vorrichtung nach Anspruch 9,
**dadurch gekennzeichnet,**
**dass** zwischen der Einmündung (72) der Zuführleitung (70) für frische Brauflüssigkeit in die Transportleitung (60) und der Fest-Flüssig-Trenneinrichtung (62) eine Misch- und/oder Reaktionseinrichtung (64) vorgesehen ist.

11. Vorrichtung nach Anspruch 10 mit nur einer Reaktionseinrichtung (64),
**dadurch gekennzeichnet,**
**dass** die Reaktionseinrichtung (64) von einer eine Reaktionsstrecke bildenden Rohrleitung gebildet ist.

12. Vorrichtung nach Anspruch 9, 10 oder 11,
**dadurch gekennzeichnet,**
**dass** die Fest-Flüssig-Trenneinrichtung (62) einen Dekanter, eine Zentrifuge, ein Bogensieb, Filterkerzen oder einen Sedimentationstank aufweist oder dadurch gebildet ist.

13. Vorrichtung nach einem der Ansprüche 9 bis 12,
**dadurch gekennzeichnet,**
**dass** die Suspensionsquelle (6, 1") einen Dispergierbehälter (1, 1') zur Erzeugung einer Suspension aus einer frischen Brauflüssigkeit und pflanzlichen Inhaltsstoffträgern aufweist.

14. Vorrichtung nach Anspruch 13,
**dadurch gekennzeichnet,**
**dass** im unteren Teil des Dispergierbehälters (1, 1') eine Rühreinrichtung (3) vorgesehen ist.

15. Vorrichtung nach einem der Ansprüche 9 bis 14,
**dadurch gekennzeichnet,**
**dass** Steuer- oder Regelventile vorgesehen sind, mittels derer die Stoffströme durch die Transportleitung (60) und die Brauflüssigkeitszuführleitung (70) zueinander einstellbar sind.

## Claims

1. A method for extracting value-adding ingredients from plant-based ingredient carriers into a brewing liquid, wherein a suspension is produced from a fresh brewing liquid and plant-based ingredient carriers, wherein the plant-based ingredient carriers are at least partially distributed or dissolved in the suspension, wherein value-adding ingredients are transferred from the plant-based ingredient carriers into the brewing liquid,
**characterised by the steps**
a') feeding the suspension to a solid-liquid separating device (62);
b') introducing fresh brewing liquid in-line into the suspension on its way to the solid-liquid separating device (62);
c') separating the plant-based ingredient carriers from the suspension in the solid-liquid separating device (62); and
d') discharging the brewing liquid enriched with value-adding ingredients from the solid-liquid separating device (62) for further use, and
e') discharging the plant-based ingredient carriers separated from the suspension in step c') from the solid-liquid separating device (62) into a solids collection vessel (69).

2. A method according to claim 1,
**characterized**
**in that** the suspension to which fresh brewing liquid has been added in step b') is passed through a mixing and/or reaction device (64) before it reaches the solid-liquid separating device (62).

3. A method according to claim 2,
**characterized**
**in that** the fresh brewing liquid introduced into the suspension in step b') is beer or young beer which is received from a storage tank (8) for beer or young beer and
**in that** the brewing liquid discharged from the solid-liquid separating device (62) in step d') and enriched with value-adding ingredients is returned to the storage tank (8).

4. A method according to any one of claims 1 to 3,
**characterised**
**in that** the brewing liquid discharged from the solid-liquid separating device (62) in step d') and enriched with value-adding ingredients is mixed with fresh brewing liquid and then passed into a storage tank (68) for aromatized brewing liquid.

5. A method according to any one of claims 1 to 4,
**characterized**
**in that**, in order to produce the initial suspension from the fresh brewing liquid and plant-based ingredient carriers, a predetermined amount of plant-based ingredient carriers is brought into contact with a predetermined volume of fresh brewing liquid in a dispergation tank (1") and the plant-based ingredient carriers are at least partially distributed or dissolved therein, thereby producing the initial suspension.

6. A method according to any one of the preceding claims, **characterized**
**in that** the extraction of value-adding ingredients from plant-based ingredient carriers into a brewing liquid is carried out in the cold zone of a brewing plant.

7. A method according to any one of the preceding claims, **characterized**
**in that** the plant-based ingredient carriers are comprised of hops or hop products and/or from plant-based aroma carriers.

8. A method according to any one of the preceding claims,
**characterized**
**in that** the value-adding ingredients are comprised of bitter substances, in particular alpha acids, beta acids and/or linalool, by aromatic substances, in particular essential oils, and/or by polyphenols.

9. A device for the extraction of value-adding ingredients from plant-based ingredient carriers into a brewing liquid in in-line operation in accordance with a method according to claim 1, having a transport line (60) for a suspension of a brewing liquid and plant-based ingredient carriers, which transport line leads from a suspension source (6, 1") to a solid-liquid separating device (62), **characterized**
**in that** furthermore a feed line (70) for fresh brewing liquid is provided, which discharges into the transport line (60).

10. A device according to claim 9,
**characterized**
**in that** a mixing and/or reaction device (64) is provided between the inlet (72) of the feed line (70) for fresh brewing liquid into the transport line (60) and the solid-liquid separating device (62).

11. A device according to claim 10 with only one reaction device (64), **characterized**
**in that** the reaction device (64) is formed by a pipeline forming a reaction track.

12. A device according to claim 9, 10 or 11,
**characterized**
**in that** the solid-liquid separating device (62) comprises or is made up of a decanter, a centrifuge, a bow screen, filter cartridges or a sedimentation tank.

13. A device according to any one of claims 9 to 12,
**characterized**
**in that** the suspension source (6, 1") comprises a dispergation tank (1, 1') for producing a suspension from a fresh brewing liquid and plant-based ingredient carriers.

14. A device according to claim 13,
**characterized**
**in that** a stirring device (3) is provided in the lower part of the dispergation tank (1, 1').

15. A device according to any one of claims 9 to 14,
**characterized**
**in that** control or regulating valves are provided, by means of which the product flows through the transport line (60) and the brewing liquid feed line (70) can be adjusted relative to one another.

## Revendications

1. Procédé d'extraction d'ingrédients valorisants hors de substrats d'ingrédients végétaux en un liquide de brassage,
dans lequel on créé une suspension d'un liquide de brassage frais et de substrats d'ingrédients végétaux,
les substrats d'ingrédients végétaux se répartissent ou se dissolvent au moins partiellement dans la suspension,
des ingrédients valorisants passent des substrats d'ingrédients végétaux au liquide de brassage,
**caractérisé par** les étapes consistant à
a') amener la suspension à un moyen de séparation solide-liquide (62) ;
b') introduire en ligne un liquide de brassage frais dans la suspension sur son chemin vers le moyen de séparation solide-liquide (62) ;
c') séparer les substrats d'ingrédients végétaux de la suspension dans le moyen de séparation solide-liquide (62) et
d') évacuer le liquide de brassage, enrichi en ingrédients valorisants, hors du moyen de séparation solide-liquide (62), pour une utilisation ultérieure, et
e') évacuer les substrats d'ingrédients végétaux, séparés de la suspension à l'étape c'), hors du moyen de séparation solide-liquide (62) vers un récipient de collecte de solides (69).

2. Procédé selon la revendication 1,
**caractérisé en ce que**
la suspension additionnée de liquide de brassage frais à l'étape b') est menée à travers un moyen de mélange et/ou de réaction (64) avant d'arriver au moyen de séparation solide-liquide (62).

3. Procédé selon la revendication 2,
**caractérisé en ce que**
le liquide de brassage frais, introduit dans la suspension à l'étape b'), est de la bière ou de la bière jeune approvisionnée à partir d'un réservoir (8) de stockage de bière ou de bière jeune, et
**en ce que** le liquide de brassage, évacué hors du moyen de séparation solide-liquide (62) à l'étape d') et enrichi en ingrédients valorisants, est renvoyé dans le réservoir de stockage (8).

4. Procédé selon l'une des revendications 1 à 3,
**caractérisé en ce que**
le liquide de brassage, évacué hors du moyen de séparation solide-liquide (62) à l'étape d') et enrichi en ingrédients valorisants, est mélangé à du liquide de brassage frais et est ensuite amené dans un réservoir (68) pour liquide de brassage aromatisé.

5. Procédé selon l'une des revendications 1 à 4,
**caractérisé en ce que**
pour produire la première suspension de liquide de brassage frais et de substrats d'ingrédients végétaux, une quantité prédéterminée de substrats d'ingrédients végétaux est mise en contact avec un volume prédéterminé de liquide de brassage frais dans un récipient de dispersion (1"), et les substrats d'ingrédients végétaux s'y répartissent ou s'y dissolvent au moins partiellement en formant la première suspension.

6. Procédé selon l'une des revendications précédentes,
**caractérisé en ce que**
l'extraction d'ingrédients valorisants hors des substrats d'ingrédients végétaux en un liquide de brassage s'effectue dans la zone froide d'une installation de brassage.

7. Procédé selon l'une des revendications précédentes,
**caractérisé en ce que**
les substrats d'ingrédients végétaux sont constitués de houblon ou de produits d'houblon et/ou de substrats d'arome végétaux.

8. Procédé selon l'une des revendications précédentes,
**caractérisé en ce que**
les ingrédients valorisants sont constitués de substances amères, en particulier d'acides alpha, d'acides bêta et/ou de linalol, de substances aromatiques, en particulier d'huiles essentielles, et/ou de polyphénols.

9. Dispositif d'extraction en ligne d'ingrédients valorisants hors de substrats d'ingrédients végétaux en un liquide de brassage conformément à un procédé selon la revendication 1,
comportant une conduite de transport (60) pour une suspension de liquide de brassage et de substrats d'ingrédients végétaux, qui mène d'une source de suspension (6, 1") à un moyen de séparation solide-liquide (62),
**caractérisé en ce que**
il est en outre prévu une conduite (70) d'alimentation en liquide de brassage frais, qui débouche dans la conduite de transport (60).

10. Dispositif selon la revendication 9,
**caractérisé en ce que**
un moyen de mélange et/ou de réaction (64) est prévu entre le débouché (72) de la conduite (70) d'alimentation en liquide de brassage frais dans la conduite de transport (60) et le moyen de séparation solide-liquide (62).

11. Dispositif selon la revendication 10 comportant un seul moyen de réaction (64),
**caractérisé en ce que**
le moyen de réaction (64) est constitué par une conduite tubulaire formant un trajet de réaction.

12. Dispositif selon la revendication 9, 10 ou 11,
**caractérisé en ce que**
le moyen de séparation solide-liquide (62) comprend ou est constitué par un décanteur, une centrifuge, un crible incurvé, des bougies filtrantes ou un réservoir de sédimentation.

13. Dispositif selon l'une des revendications 9 à 12,
**caractérisé en ce que**
la source de suspension (6, 1") comprend un récipient de dispersion (1, 1') pour produire une suspension d'un liquide de brassage frais et de substrats d'ingrédients végétaux.

14. Dispositif selon la revendication 13,
**caractérisé en ce que**
un moyen d'agitation (3) est prévu dans la partie inférieure du récipient de dispersion (1, 1').

15. Dispositif selon l'une des revendications 9 à 14,
**caractérisé en ce que**
il est prévu des vannes de commande ou de régulation par lesquelles les flux de substances à travers la conduite de transport (60) et la conduite d'alimentation en liquide de brassage (70) peuvent être réglés l'un par rapport à l'autre.
